# EUROPEAN PATENT APPLICATION

(11) **EP 3 654 639 A1**
(43) Date of publication of application: **20.05.2020**
(21) Application number: 19192972.8
(22) Date of filing: 22.08.2019
(51) Int. Cl.: H04N 7/14

(54) **COMMUNICATION SYSTEM, CARRIER MEANS, AND TERMINAL APPARATUS**

(30) Priority: 19.11.2018 JP 2018216890
(71) Applicant: Ricoh Company, Ltd., Tokyo 143-8555 (JP)
(72) Inventor: HASEGAWA, Takashi, Tokyo, 143-8555 (JP)
(74) Representative: SSM Sandmair

(57) **Abstract**

A communication system (100) includes a plurality of terminal apparatuses including a first terminal apparatus (70x, 70y) and a second terminal apparatus (10a, 10b, 10c, 10d). The first terminal apparatus includes one or more peripheral devices (712a, 712b, 714, 715), each being configured to receive an input of at least one of image data and audio data; and transmitting means (74) for transmitting, to the second terminal apparatus, information regarding a user of the first terminal apparatus. The second terminal apparatus includes outputting means (17) for outputting the at least one of the image data and the audio data received from the first terminal apparatus, and receiving means (15) for receiving the information regarding the user from the first terminal apparatus. The outputting means displays information regarding the one or more peripheral devices that the first terminal apparatus includes identified based on the received information regarding the user.

## Description

### BACKGROUND

### Technical Field

The present invention relates to a communication system, carrier means, and a terminal apparatus.

### Description of the Related Art

In a known communication system, terminal apparatuses provided in remote sites mutually transmit and receive images and audio to display images on displays and output audio from speakers, and thereby users in the remote sites can perform telecommunication such as a conference. By using such a communication system, for example, an operator at a call center can look at the face of a guest who visits a store while helping the guest, and the guest can also look at the face of the operator while being given explanation.

Each of the terminal apparatuses includes a camera, a microphone, a display, and a speaker. An image captured by the camera is displayed on the display of a communication-partner terminal apparatus, and audio obtained by the microphone is output from the speaker of the communication-partner terminal apparatus. These peripheral devices can be set in various manners, but the guest has a few opportunities to use the terminal apparatus and thus is not accustomed to operating the peripheral devices in some cases.

Thus, a technique is known in which the operator remotely operates the guest's terminal apparatus (e.g., see JP-1996-181958-A). For example, JP-1996-181958-A discloses a system in which a plurality of image capturing conditions and still images are stored as sets, and a user refers to the sets to select an image capturing condition.

However, in the conventional art, there is a drawback that that it is difficult for the operator to identify a terminal apparatus that is to be remotely operated. For example, in a case where a terminal apparatus directly operated by the operator is in communication with a plurality of terminal apparatuses, if the plurality of terminal apparatuses have similar image capturing conditions, it has been difficult for the operator to identify a still image and a terminal apparatus that has captured the image. Even if the terminal apparatus directly operated by the operator is in communication with a single terminal apparatus, it has been difficult to determine whether the operator can perform remote operation.

### SUMMARY

In view of the above-described issue, an object of the present invention is to provide a communication system in which a terminal apparatus that is to be remotely operated can be identified.

In one aspect of the present invention, a communication system includes a plurality of terminal apparatuses including a first terminal apparatus and a second terminal apparatus. The first terminal apparatus includes one or more peripheral devices, each being configured to receive an input of at least one of image data and audio data, and transmitting means for transmitting, to the second terminal apparatus, information regarding a user of the first terminal apparatus. The second terminal apparatus includes outputting means for outputting the at least one of the image data and the audio data received from the first terminal apparatus, and receiving means for receiving the information regarding the user from the first terminal apparatus. The outputting means displays information regarding the one or more peripheral devices that the first terminal apparatus includes identified based on the information regarding the user received by the receiving means.

According to one aspect of the present invention, a communication system is provided in which a terminal apparatus that is to be remotely operated can be identified.

### BRIEF DESCRIPTION OF THE SEVERAL VIEWS OF THE DRAWINGS

A more complete appreciation of the invention and many of the attendant advantages and features thereof can be readily obtained and understood from the following detailed description with reference to the accompanying drawings, wherein:
FIG. 1 illustrates an outline of control of peripheral devices in a communication system, according to an embodiment of the present invention;
FIG. 2 is a schematic diagram illustrating an example of a configuration of the communication system, according to an embodiment of the present invention;
FIG. 3 is a block diagram illustrating an example of a hardware configuration of a terminal apparatus, according to an embodiment of the present invention;
FIG. 4 is a block diagram illustrating an example of a hardware configuration of a management system, according to an embodiment of the present invention;
FIGs. 5A and 5B are block diagrams, each illustrating an example of a software configuration of the terminal apparatus, according to an embodiment of the present invention;
FIGs. 6A and 6B are a block diagram illustrating examples of functional configurations of the terminal apparatus and the management system of the communication system, according to an embodiment of the present invention;
FIGs. 7A, 7B, 7C, 7D, and 7E illustrate examples of an address management database (DB), a presence management DB, and a destination management DB, according to an embodiment of the present invention;
FIG. 8 is a sequence diagram illustrating an example of a process in which the terminal apparatuses logs in to the management system, according to an embodiment of the present invention;
FIG. 9 illustrates an example of a reception screen, according to an embodiment of the present invention;
FIG. 10 is a sequence diagram illustrating an example of a process for transmitting presence information, according to an embodiment of the present invention;
FIG. 11 is a flowchart illustrating an example of a process for managing presence of each feature, according to an embodiment of the present invention;
FIG. 12 is a sequence diagram illustrating an example of a process for starting communication, according to an embodiment of the present invention;
FIG. 13 illustrates an example of a screen of a feature list displayed when a presence management table is in the state of Table 2, according to an embodiment of the present invention;
FIG. 14 is a sequence diagram illustrating an example of a process for updating a destination of a call start request, according to an embodiment of the present invention;
FIG. 15 is a sequence diagram illustrating an example of a process for establishing communication between terminal apparatuses, according to an embodiment of the present invention;
FIG. 16 illustrates a display example of a message, according to an embodiment of the present invention;
FIG. 17 is a conceptual diagram of an example of an attribute information management table stored in an attribute information management DB, according to an embodiment of the present invention;
FIG. 18 is an example of a sequence diagram illustrating a procedure in which a terminal apparatus transmits attribute information and peripheral device information to terminal apparatuses, according to an embodiment of the present invention;
FIG. 19 illustrates an example of a peripheral device setting screen displayed by the terminal apparatus, according to an embodiment of the present invention;
FIGs. 20A and 20B illustrate an example of a call screen displayed on an operator's terminal apparatus during a teleconference, according to an embodiment of the present invention;
FIG. 21 illustrates an example of a call screen displayed on a guest's terminal apparatus during a teleconference, according to an embodiment of the present invention;
FIG. 22 is an example of a sequence diagram illustrating a procedure in which terminal apparatuses transmit operation information of peripheral devices to a terminal apparatus, according to an embodiment of the present invention;
FIGs. 23A and 23B illustrate examples of the call screen displayed on a display of the operator's terminal apparatus, according to an embodiment of the present invention; and
FIG. 24 illustrates examples of operation information of operations that the operator can perform on a terminal apparatus, according to an embodiment of the present invention.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the invention of this specification is not intended to be limited to the specific terminology so selected and it is to be understood that each specific element includes all technical equivalents that have a similar function, operate in a similar manner, and achieve a similar result.

Now, an embodiment of the present invention will be described with reference to the drawings.

### Outline of Operations

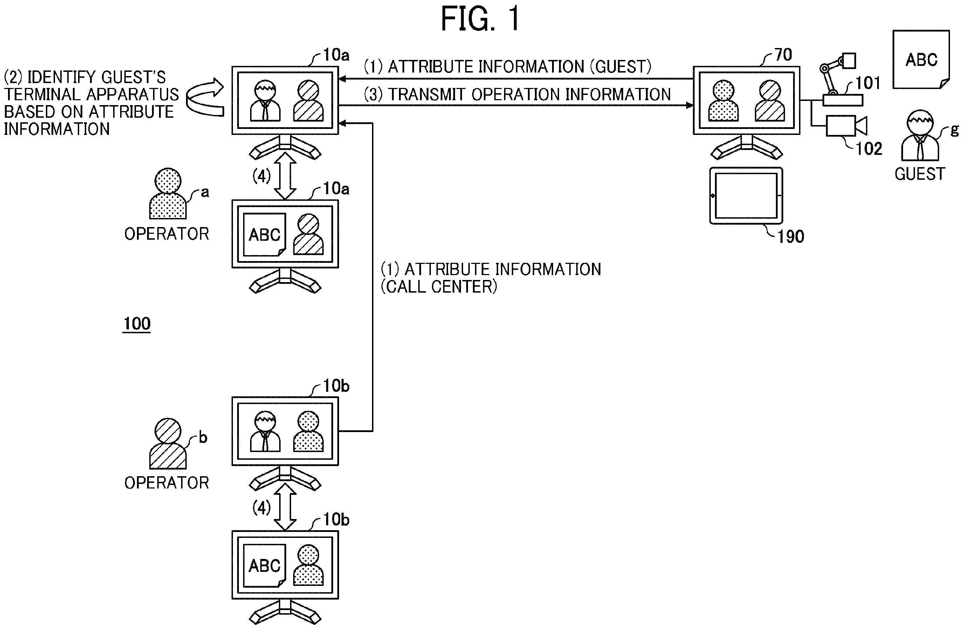

FIG. 1 illustrates an outline of control of peripheral devices in a communication system 100 according to this embodiment. In FIG. 1, three terminal apparatuses, that is, a terminal apparatuses 10a, a terminal apparatus 10b and a terminal apparatus 70 conduct a teleconference. The terminal apparatus 10a and the terminal apparatus 10b are assumed to be located in a call center 8, and the terminal apparatus 70 (a first terminal apparatus) is assumed to be located in a store. The terminal apparatus 10a and the terminal apparatus 10b (each of them is a second terminal apparatus) are operated by operators a and b, and the terminal apparatus 70 is operated by a guest g who visits the store. Note that the terminal apparatus 70 operated by the guest g is connected to a web camera 101 and a document camera 102. Note that although a web camera and a document camera can be also connected to each of the terminal apparatus 10a and the terminal apparatus 10b, the web camera and the document camera are omitted in FIG. 1.
(1) Upon the start of a teleconference, for example, the terminal apparatus 70 transmits attribute information of the terminal apparatus 70 to the other terminal apparatuses, which are the terminal apparatus 10a and the terminal apparatus 10b. In FIG. 1, the terminal apparatus 70 transmits attribute information (guest) to the terminal apparatus 10a. Note that the terminal apparatus 10b also transmits attribute information (call center) to the terminal apparatus 10a. The terminal apparatus 10a also transmits attribute information, but the transmission is omitted in FIG. 1. The attribute information mainly indicates whether the terminal apparatus is the terminal apparatus 70 operated by the guest g or the terminal apparatuses 10a or 10b operated by the operator a or the operator b.
(2) On the basis of the attribute information received from each of the terminal apparatus 10b and the terminal apparatus 70, the terminal apparatus 10a identifies the terminal apparatus 70 operated by the guest g, thereby determining the terminal apparatus 70 as a destination of operation information.
(3) For example, in a state where the terminal apparatus 70 transmits an image captured by the web camera 101, when the operator a wishes to view an image captured by the document camera 102, the operator a transmits, to the terminal apparatus 70, operation information for switching an image to be transmitted from the terminal apparatus 70 from the image captured by the web camera 101 to an image captured by the document camera 102.
(4) This causes the terminal apparatus 70 to transmit the image captured by the document camera 102 to the terminal apparatus 10a and the terminal apparatus 10b, and thus, even if the guest g does not operate the terminal apparatus 70, the operator a (and the operator b) can check the image captured by the document camera 102.

In this manner, in the communication system 100 according to this embodiment, in a case where the terminal apparatus 10a, the terminal apparatus 10b, and the terminal apparatus 70 are in communication (during communication), on the basis of the attribute information received from the terminal apparatus 10b and the terminal apparatus 70 with which the terminal apparatus 10a is communicating, the guest's terminal apparatus 70 can be identified. This enables transmission of the operation information to the guest's terminal apparatus 70.

### Terminology

A "peripheral device" refers to any device connected to a main unit of an apparatus. The peripheral device can be built in the apparatus or can be connected to the apparatus via a cable. In this embodiment, the peripheral device is, for example, a camera, a microphone, a speaker, a display, or the like.

The "attribute information" refers to information indicating the type of a user of a terminal apparatus. Any attribute information can be transmitted as long as prediction can be made based on the transmitted information as to whether the user is a guest or whether the user is able to operate the terminal apparatus, for example. The attribute information can be, for example, the age or physical state. The attribute information can be stored in application software or the terminal apparatus, or can be input by a user or the like. In a case where the attribute information is stored in application software, the attribute information can be considered as attribute information of the application software. The terminal apparatus can determine that the user is not a staff (that the user is a guest) by using login information or facial recognition. Although in this embodiment, a description is given hereinafter on the assumption that the attribute information is the user's attribute information, the attribute information is not limited to this but includes attribute information of the terminal apparatus used by the user. The attribute information is an example of information regarding a user.

### System Configuration

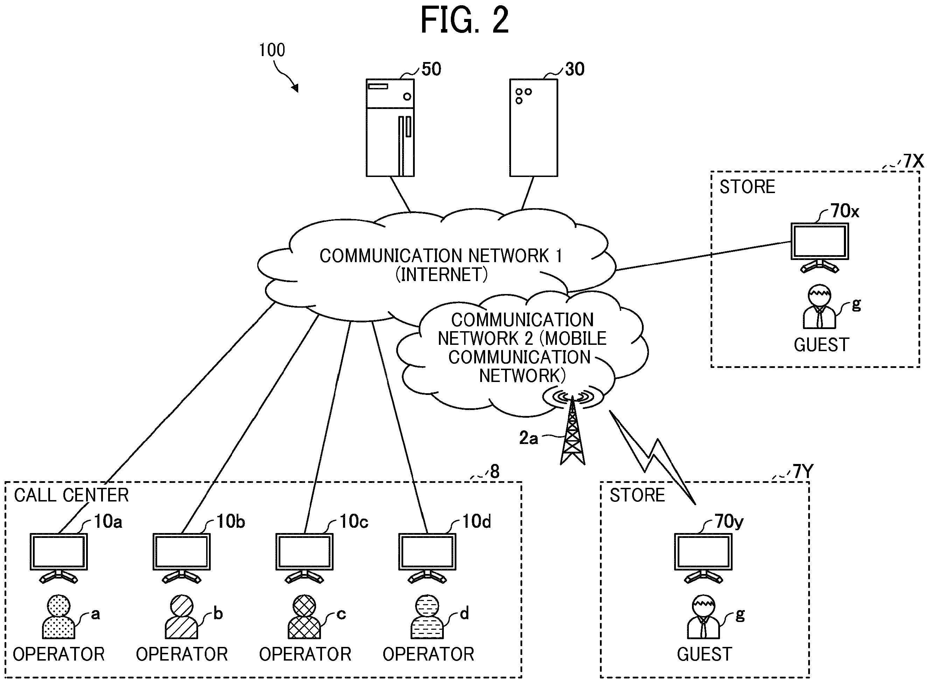

FIG. 2 is a schematic diagram illustrating an example of a configuration of the communication system 100 according to this embodiment. As illustrated in FIG. 2, the communication system 100 according to this embodiment includes a plurality of terminal apparatuses 10 (the terminal apparatus 10a, the terminal apparatus 10b, a terminal apparatus 10c, a terminal apparatus 10d), a plurality of terminal apparatuses 70 (a terminal apparatus 70a and a terminal apparatus 70y), one or more relay apparatuses 30, and one or more management systems 50, which are provided in corresponding sites. The site herein is a place where activities are performed. The sites are a place where each of the terminal apparatuses 10 and the terminal apparatuses 70 are provided or a place where a user is present. FIG. 2 illustrates three sites (the call center 8, a store 7X, and a store 7Y).

The terminal apparatuses 10a to 10d are located in the call center 8, the terminal apparatus 70x is located in the store 7X, and the terminal apparatus 70y is located in the store 7Y. The number of illustrated terminal apparatuses is an example. In addition, of the terminal apparatus 70x and the terminal apparatus 70y, a given terminal apparatus or given terminal apparatuses will be referred to as "terminal apparatus 70" or "terminal apparatuses 70". Of the terminal apparatuses 10a to 10d, a given terminal apparatus or given terminal apparatuses will be referred to as "terminal apparatus 10" or "terminal apparatuses 10". Of the store 7X and the store 7Y, a given store or given stores will be referred to as "store 7" or "stores 7".

The call center 8 is an office that answers an inquiry from a guest. A person who responds the inquiry at the call center 8 is referred to as an operator in this embodiment. The person may also be referred to as a concierge, a docent, an instructor, an advisor, or the like. In addition, the store 7 is business facility. The store 7 is facility where actual products or service brochures are provided and guests can visit. The store 7 is, for example, a travel agency, a bank, a clinic, or the like, and may be any other facility where a user visits. A guest who visits the store 7 operates the terminal apparatus 70 that is located in advance, thereby starting a teleconference with the terminal apparatus 10 at the call center 8. Thus, the number of staffs staying at the store 7 can be minimized, or a highly specialized staff and a guest at any site can conduct a teleconference.

Although the terminal apparatus 10 for operators is located in the call center 8 in FIG. 2, the terminal apparatus 10 for operators may be located in the store 7 in some cases. Thus, for example, if the store 7 is quiet, a staff at the store 7 can respond as an operator. As will be described later, each of the terminal apparatus 10 and terminal apparatus 70 may be a typical information processing apparatus, and it is possible to switch between the terminal apparatus for operators and the terminal apparatus for guests by using application software (application software for teleconference).

Each of the terminal apparatus 10 and the terminal apparatus 70 may be a typical information processing apparatus such as a personal computer (PC). Application software for operators is installed in the terminal apparatus 10, and application software for guests is installed in the terminal apparatus 70. Accordingly, depending on the application software, the attribute information of each of the terminal apparatuses 10 and the terminal apparatus 70 is determined. The attribute information may be determined depending on the application software as described above, or may be determined by a communication ID that will be described later. In this case, a table in which the attribute information is associated with the communication ID can be used by each of the terminal apparatuses 10 and the terminal apparatus 70.

Being a typical information processing apparatus, each of the terminal apparatus 10 and the terminal apparatus 70 can execute, in addition to the application software for teleconference, presentation software, browser software, or the like. The terminal apparatus 10 and the terminal apparatus 70 is, in addition to a PC, a tablet terminal, a smartphone, a personal digital assistant (PDA), or the like. Note that any apparatus can be used as the terminal apparatus 10 and the terminal apparatus 70 as long as the apparatus can execute application software. For example, the terminal apparatus 10 and the terminal apparatus 70 may be a car navigation apparatus, a television receiver, a digital signage terminal, an electronic whiteboard, a projector, or the like. In addition, the terminal apparatus 10 and the terminal apparatus 70 are not necessarily the same type of information processing apparatus.

Note that a terminal apparatus dedicated to a teleconference may be used as the terminal apparatus 10 and the terminal apparatus 70. The form of the terminal apparatus dedicated to a teleconference is a dedicated terminal apparatus that logs in to the management system 50 upon turning on of the power, to transmit and receive video and audio.

The communication system 100 according to this embodiment is applicable to a teleconference in the following description. However, the communication system 100 is also applicable to a communication system or a data communication system. The communication system 100 further includes a data providing system that transmits image data or audio data in one direction from a terminal apparatus 10 to a plurality of terminal apparatuses 10 through a server. Note that a teleconference may also be referred to as a video conference. The teleconference may also be referred to as a remote conference, remote consulting, or the like.

The terminal apparatuses 10, the management system 50, and the relay apparatus 30 are connected to a communication network 1 or a communication network 2. The communication network 1 may be a typical network such as a local area network (LAN) or the internet. For example, the communication network 1 may include a dedicated line such as Wide Area Ethernet (registered trademark) or Virtual Private Network (VPN). In a case of wireless communication, the terminal apparatuses are connected to the communication network 2 (mobile communication network) by using a base station 2a as an access point. The communication network 2 includes spots at which wireless communication is performed, such as Wireless Fidelity (Wi-Fi), 3G, 4G, Long Term Evolution (LTE), 5G, and Bluetooth (registered trademark).

In the communication system 100 according to this embodiment, the plurality of terminal apparatuses 10 and the terminal apparatus 70 transmit and receive image data (including data of still images and moving images, also referred to as video data), audio data, and the like through the relay apparatus 30. At this time, a management information session is established between each of the terminal apparatuses 10 and the terminal apparatus 70 through the management system 50. The management information session is for transmitting and receiving various kinds of management information. In addition, a data session is also established between each of the terminal apparatuses 10 and the terminal apparatus 70 through the relay apparatus 30. The data session is for transmitting and receiving image data and audio data. Here, in particular, the image data transmitted and received in the data session are encoded data that is encoded in a scalable manner. For example, encoded data for high-quality video, encoded data for medium-quality video, and encoded data for low-quality video are each transmitted and received on a different channel.

As one of the functions of a teleconference, the terminal apparatus 10 and the terminal apparatus 70 transmit, to the terminal apparatus 10 and the terminal apparatus 70 that participate in the teleconference at other sites through the relay apparatus 30, image data captured by a camera (image capturing apparatus), audio data collected by a microphone, and document data used for illustration or the like. Furthermore, handwriting information can also be transmitted to the terminal apparatus 10 and the terminal apparatus 70 at other sites. The functions also include a function of displaying, on a display, image data, document data, and handwriting information received from the terminal apparatus 10 and the terminal apparatus 70 at other sites, and a function of outputting received audio data from a speaker. The image data, the document data, the handwriting information, and the audio data may be collectively referred to as content data, or one or more of the image data, the document data, the handwriting information, and the audio data may be referred to as content data.

Upon the start of a teleconference, the terminal apparatus 10 and the terminal apparatus 70 transmit image data, audio data, document data, and handwriting information to the relay apparatus 30, and the relay apparatus 30 transmits the image data, audio data, document data, and handwriting information to the other terminal apparatuses 10 participating in the teleconference. In addition, the terminal apparatus 10 and the terminal apparatus 70 receive image data, audio data, document data, and handwriting information from the other terminal apparatuses 10 through the relay apparatus 30.

The management system 50 serves as a call control server that manages communication IDs or the like of the terminal apparatus 10 and the terminal apparatus 70 and that performs call control for starting a session between two or more terminal apparatuses in response to an incoming call, for example. Since the management system 50 is a server, the management system 50 has functions of an information processing apparatus. The call control is processes for starting and ending a call, such as making a call for starting communication, receiving the call, responding the call, and ending the communication. In addition, in many cases, the management system 50 also authenticates the terminal apparatus 10 and the terminal apparatus 70, searches for the terminal apparatus 10 and the terminal apparatus 70, and performs alive monitoring, for example. Furthermore, the management system 50 also manages a database used for controlling the communication system 100, such as a database storing authentication information of the terminal apparatus 10 and the terminal apparatus 70.

The relay apparatus 30 is a server (information processing apparatus) that relays image data, audio data, document data, and handwriting data from the terminal apparatus 10 and the terminal apparatus 70 at a site to the terminal apparatus 10 and the terminal apparatus 70 at another site. The management system 50 monitors the band of the communication network 2 and the communication load of the relay apparatus 30 to assign the appropriate relay apparatus 30 to the terminal apparatus 10 and the terminal apparatus 70.

### Hardware Configuration Example

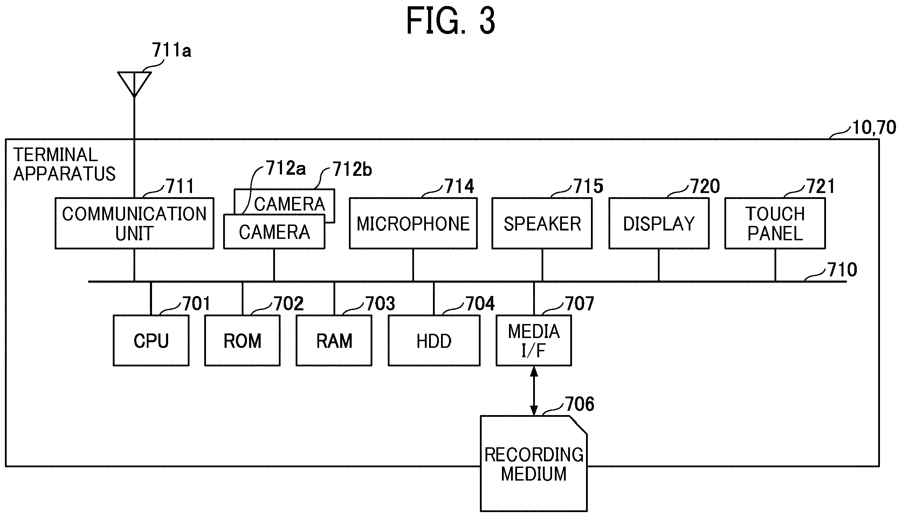

FIG. 3 is a block diagram illustrating an example of a hardware configuration of the terminal apparatus 10 and the terminal apparatus 70. As illustrated in FIG. 3, each of the terminal apparatus 10 and the terminal apparatus 70 includes a central processing unit (CPU) 701, a read only memory (ROM) 702, a random access memory (RAM) 703, a hard disk drive (HDD) 704, a media interface (I/F) 707, a camera 712a, and a camera 712b. The CPU 701 controls the entire operations of the terminal apparatus. The ROM 702 stores a program. The RAM 703 is used as a work area of the CPU 701. The HDD 704 reads or writes data under control of the CPU 701. The media I/F 707 controls reading or writing (storing) of data from/to a recording medium 706 such as a flash memory. Each of the cameras 712a and 712b captures an image of a subject under control of the CPU 701 to obtain image data.

Note that the HDD 704 stores an operating system (OS) executed by the CPU 701, other programs, and various kinds of data. In addition, each of the cameras 712a and 712b is a charge coupled element that converts light into charge to obtain electronic data of a subject image. Each of the cameras 712a and 712b is, for example, a complementary metal oxide semiconductor (CMOS) sensor or a charge coupled device (CCD) sensor. Of the cameras 712a and 712b, a given camera or given cameras will be referred to as "camera 712" or "cameras 712". The number of cameras 712 may be three or more.

Furthermore, each of the terminal apparatus 10 and the terminal apparatus 70 includes a microphone 714, a speaker 715, an antenna 711a, a communication device 711, a display 720, a touch panel 721, and a bus line 710. The microphone 714 converts sounds to sound signals. The speaker 715 converts sound signals into sounds. The communication device 711 performs communication with the nearest base station 2a by using the antenna 711a using a radio communication signal. The display 720 displays the subject image, various icons, and the like. For example, the display 720 is a liquid crystal display or an organic electroluminescent (EL) display. The touch panel 721 is placed onto the display 720 and is configured from a pressure-sensitive or capacitive panel. The touch panel 721 detects a position touched by a finger, a stylus, or the like on the display 720. The bus line 710 electrically connects the above devices to each other. For example, the bus line 710 is an address bus or a data bus.

Although the single microphone 714 and the single speaker 715 are illustrated in FIG. 3, two or more microphones 714 and two or more speakers 715 may be provided.

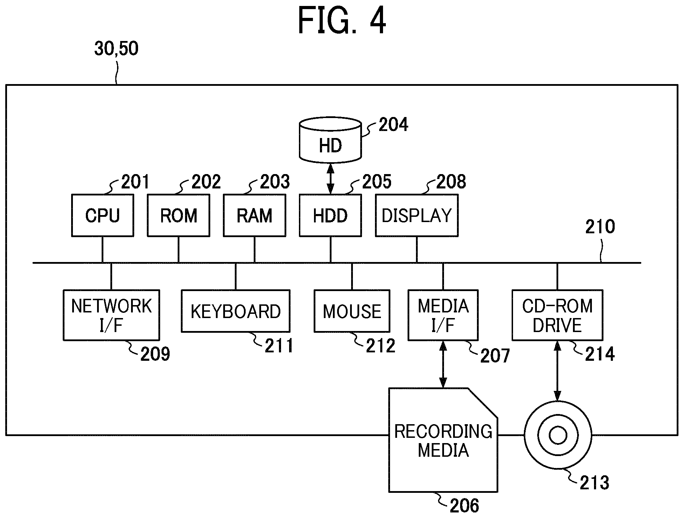

FIG. 4 is a block diagram illustrating an example of a hardware configuration of the management system 50. The management system 50 includes a CPU 201, a ROM 202, a RAM 203, a hard disk (HD) 204, an HDD 205, a media I/F 207, a display 208, a network I/F 209, a keyboard 211, a mouse 212, a compact disc (CD)-ROM drive 214, and a bus line 210. The CPU 201 controls the entire operations of the management system 50. The ROM 202 stores a program used for driving the CPU 201, such as an initial program loader (IPL). The RAM 203 is used as a work area of the CPU 201. The HD 204 stores various kinds of data such as a program for the management system 50. The HDD 205 controls reading or writing of various kinds of data from/to the HD 204 under control of the CPU 201. The media I/F 207 controls reading or writing (storing) of data from/to a recording medium 206 such as a flash memory. The display 208 displays various kinds of information such as a cursor, a menu, a window, characters, and images. The network I/F 209 is an interface that enables the management system 50 to perform data communication with an external apparatus by using the communication network 2. The keyboard 211 includes a plurality of keys for inputting characters, numerical values, and various instructions. The mouse 212 is used for selecting and executing various instructions, selecting a processing target, moving the cursor, and the like. The CD-ROM drive 214 controls reading or writing of various kinds of data from/to a CD-ROM 213 as an example of a detachable/attachable non-transitory computer-readable medium. The bus line 210 is an address bus, a data bus, or the like for electrically connecting the above components as illustrated in FIG. 4.

The relay apparatus 30 has the same or substantially the same hardware configuration as the management system 50, and therefore a description thereof will be omitted.

### Application Software

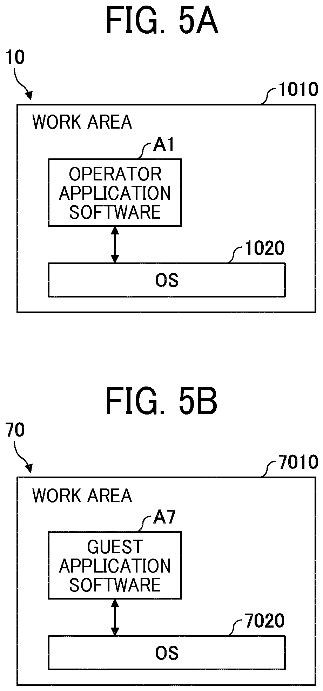

FIG. 5A is a block diagram illustrating an example of a software configuration of the terminal apparatus 10 according to an embodiment. In the terminal apparatus 10, operator application software A1 is installed. As illustrated in FIG. 5A, an OS 1020 and the operator application software A1 run on a work area 1010 in the RAM 703 of the terminal apparatus 10. The OS 1020 is basic software that provides basic functions and manages the entirety of the terminal apparatus 10. The operator application software A1 is an application for performing communication with other terminal apparatuses 10 and the terminal apparatus 70.

FIG. 5B is a block diagram illustrating an example of a software configuration of the terminal apparatus 70 according to an embodiment. In the terminal apparatus 70, guest application software A7 is installed. As illustrated in FIG. 5B, an OS 7020 and the guest application software A7 run on a work area 7010 in the RAM 703 of the terminal apparatus 70. The OS 7020 is basic software that provides basic functions and manages the entirety of the terminal apparatus 70. The guest application software A7 is an application for performing communication with one or more other terminal apparatuses 10 and 70.

Note that some of the functions of the guest application software A7 are restricted by the operator application software A1. According to a design principle, the operator performs almost all the operations, and the guest performs minimum operations. For example, the guest is allowed to perform the following operations.
1. Depression of a button for calling the operator
2. Adjustment of volume of the speaker 715
3. Switching between display and non-display of an image of own site (a site where the guest is present)

Note that communication protocols for application software include (1) Session Initiation Protocol (SIP), (2) H.323, (3) SIP-extended protocol, (4) instant messenger protocol, (5) protocol using a MESSAGE method of SIP, (6) Internet Relay Chat (IRC) protocol, (7) instant messenger protocol-extended protocol, and the like. Among them, (4) instant messenger protocol is, for example, (4-1) Extensible Messaging and Presence Protocol (XMPP) or (4-2) protocol used for ICQ (registered trademark), AIM (registered trademark), Skype (registered trademark), or the like. In addition, (7) instant messenger protocol-extended protocol is, for example, Jingle.

### Functions

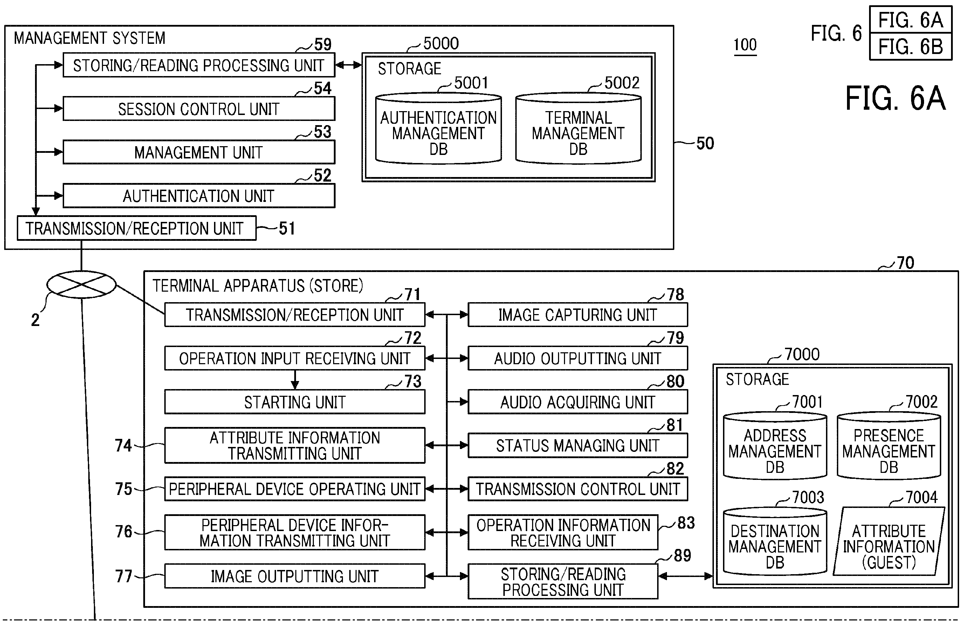

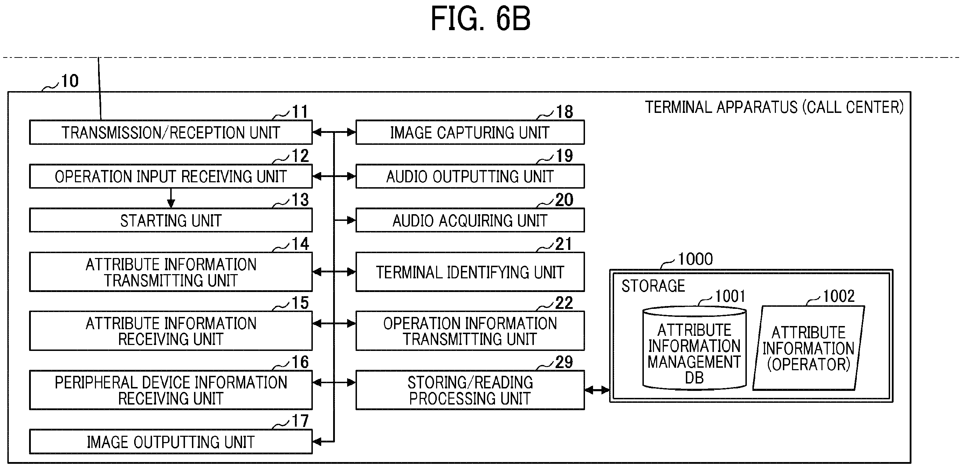

FIG. 6 is a block diagram illustrating examples of functions of the terminal apparatus 10, the terminal apparatus 70, and the management system 50 included in the communication system 100 according to this embodiment. Note that the function of the relay apparatus 30 is relaying image data and therefore is omitted from illustration in FIG. 6.

### Functional Configurations of Terminal Apparatuses

Now, the functions of the terminal apparatus 10 used by the operator at the call center 8 and the functions of the terminal apparatus 70 used by the guest who visits the store 7 will be individually described. Differences between the functions of the terminal apparatus 10 and the functions of the terminal apparatus 70 are based on a difference in the application software. However, the terminal apparatus at the call center 8 and the terminal apparatus at the store 7 may execute the same application software, and may have different functions by preparing operations that can be executed by the operator with authentication.

### Terminal Apparatus at Call Center

The terminal apparatus 10 at the call center 8 includes a transmission/reception unit 11, an operation input receiving unit 12, a starting unit 13, an attribute information transmitting unit 14, an attribute information receiving unit 15, a peripheral device information receiving unit 16, an image outputting unit 17, an image capturing unit 18, an audio outputting unit 19, an audio acquiring unit 20, a terminal identifying unit 21, an operation information transmitting unit 22, and a storing/reading processing unit 29. These units are functions or means implemented by any of the components illustrated in FIG. 3 operating in response to instructions from the CPU 701 in accordance with the operator application software A1 loaded from the HDD 704 into the RAM 703.

The terminal apparatus 10 further includes a storage unit 1000 established by the RAM 703 and the HDD 704 illustrated in FIG. 3. The storage unit 1000 stores the operator application software A1 downloaded from the management system 50 or the like and temporarily stores image data, audio data, document data, and handwriting information. The storage unit 1000 further stores attribute information (operator) that is set by the operator application software A1.

In addition, the storage unit 1000 further stores communication identification (ID) for identifying the terminal apparatus 10, a password, and the like. The ID is an abbreviation for identification, meaning an identifier or identification information. The ID is a name, a sign, a character string, or a numerical value alone or in combination used for uniquely distinguishing a certain target from a plurality of targets. This applies to the other IDs.

In addition, in the storage unit 1000, an attribute information management DB 1001 is established. Now, processes using the attribute information management DB 1001 will be described.

The transmission/reception unit 11 transmits and receives various kinds of data (or information) to and from the management system 50 and the relay apparatus 30 via the communication network 2. In other words, the transmission/reception unit 11 performs communication with the other terminal apparatuses 10 through the management system 50 and the relay apparatus 30. Before start of a call with a desired partner terminal, the transmission/reception unit 11 starts to receive pieces of status information indicating the statuses of terminals as candidate communication partners from the management system 50.

The operation input receiving unit 12 receives various inputs to the terminal apparatus 10 by the operator at the call center 8. For example, upon a user turning on a power switch, the operation input receiving unit 12 receives the turning on, and notifies the starting unit 13 of the turning on.

The starting unit 13 starts the terminal apparatus 10 in response to the turning on. The starting unit 13, for example, executes the IPL, reads the operator application software A1 in the storage unit 1000 and transfers it to the RAM 703 in FIG. 3. Furthermore, by causing the CPU 701 to execute the operator application software A1, the starting unit 13 performs, for example, a process in which the terminal apparatus 10 logs in to the management system 50.

The attribute information transmitting unit 14 transmits the attribute information (operator) stored in the storage unit 1000 to the other terminal apparatuses 10 and the terminal apparatus 70, which are participating in a teleconference, through the transmission/reception unit 11. Even if the attribute information (operator) is transmitted to the terminal apparatus 70, the attribute information (operator) is not used by the terminal apparatus 70 for processing; or the attribute information (operator) is not transmitted to the terminal apparatus 70.

The attribute information receiving unit 15 receives attribute information from the terminal apparatus 10 at the call center 8 and from the terminal apparatus 70 at the store 7, which are participating in the teleconference, through the transmission/reception unit 11. The attribute information may be automatically transmitted upon the start of the teleconference or the like or may be transmitted in response to a request from the attribute information receiving unit 15 of the terminal apparatus 10 at the call center 8.

The peripheral device information receiving unit 16 receives peripheral device information from the guest's terminal apparatus 70 through the transmission/reception unit 11. The peripheral device information indicates, for example, what kind of peripheral devices the guest's terminal apparatus 70 has.

The image outputting unit 17 controls output, to the display 720, of image data, document data, and handwriting information transmitted from the relay apparatus 30. In addition, the image outputting unit 17 causes the display 720 to display various screens.

The image capturing unit 18 converts captured image data obtained by capturing images of a subject by using the cameras 712a and 712b into predetermined image data and outputs the image data. The image capturing unit 18 can switch between the camera 712a and the camera 712b so as to output the image.

The audio outputting unit 19 reproduces and outputs audio data transmitted from the relay apparatus 30, by using the speaker 715.

After the microphone 714 converts the operator's audio into an audio signal, the audio acquiring unit 20 converts the audio signal into predetermined audio data and outputs the audio data.

On the basis of the attribute information, the terminal identifying unit 21 identifies the terminal apparatus 70 in which the guest application software A7 is installed. The attribute information includes attribute information indicating whether the terminal apparatus (the application software installed therein) is for operators or for guests.

The operation information transmitting unit 22 transmits operation information indicating the operator's operation on the terminal apparatus 70 at the store 7 to the terminal apparatus 70 at the store 7 through the transmission/reception unit 11. For example, in a case where the terminal apparatus 70 at the store 7 includes the two cameras, the cameras 712a and 712b, if the operator performs an operation for switching the cameras 712, the operation input receiving unit 12 receives the operation and transmits operation information that designates the camera 712 to be switched to.

The storing/reading processing unit 29 stores various kinds of data in the storage unit 1000 and reads various kinds of data stored in the storage unit 1000.

### Terminal Apparatus 70 at Store

The terminal apparatus 70 at the store 7 includes a transmission/reception unit 71, an operation input receiving unit 72, a starting unit 73, an attribute information transmitting unit 74, a peripheral device operating unit 75, a peripheral device information transmitting unit 76, an image outputting unit 77, an image capturing unit 78, an audio outputting unit 79, an audio acquiring unit 80, a status managing unit 81, a transmission control unit 82, an operation information receiving unit 83, and a storing/reading processing unit 89. In the description of these units, differences from the terminal apparatus 10 for call centers will mainly be described.

The peripheral device information transmitting unit 76 transmits information about peripheral devices that the operator can operate. For example, the peripheral device information transmitting unit 76 transmits information as to which of the cameras 712a and 712b is a main camera and is a sub-camera, which one of the speakers 715 is for incoming call, which one of the speakers 715 is for call, which one of the microphones 714 is to be used, and the like. These are set in advance by a staff at the store 7.

The status managing unit 81 is implemented by instructions from the CPU 701 and, on the basis of presence information transmitted from the terminal apparatus 10, manages the status of candidate addresses.

The transmission control unit 82 is implemented by instructions from the CPU 701 and, on the basis of the status of candidate addresses, controls transmission of a request for starting a call to a candidate address.

The operation information receiving unit 83 receives the operation information from the operator's terminal apparatus 10. In accordance with the operation information received from the terminal apparatus 10 at the call center 8 through the transmission/reception unit 71, the peripheral device operating unit 75 operates the peripheral devices. For example, in a case where the terminal apparatus 70 at the store 7 receives operation information for designating the camera 712a or 712b to capture an image, the image capturing unit 78 designates the camera 712a or 712b to be switched to.

In a storage 7000 in the terminal apparatus 70 at the store 7, in addition to attribute information (guest) 7004, an address management DB 7001, a presence management DB 7002, and a destination management DB 7003 are established.

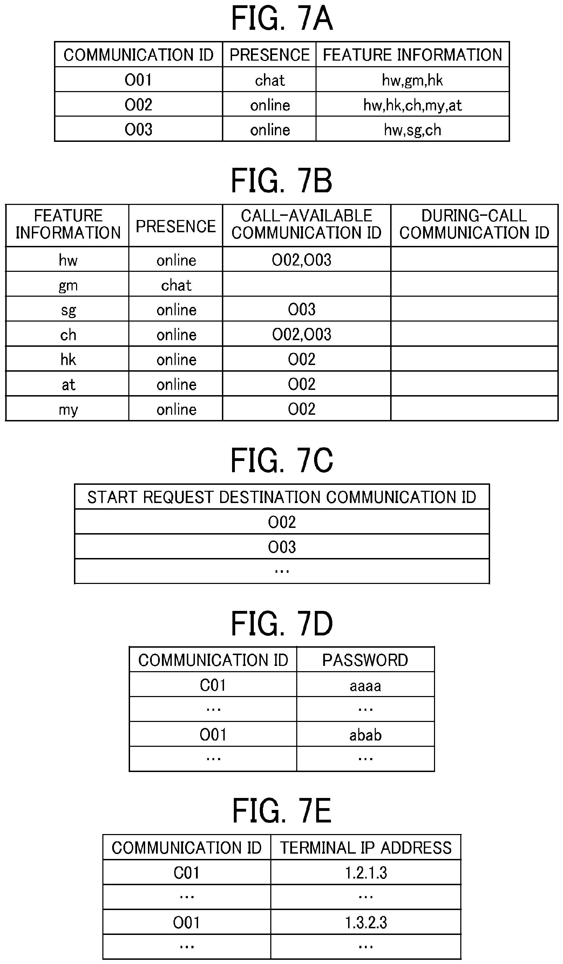

FIG. 7A illustrates an example of an address management table stored in the address management DB 7001. In the address management table, a communication ID, presence, and feature information are associated with each other for management. The communication ID is of the operator's terminal apparatus 10 that is a candidate address. The presence indicates the status of the candidate address. The feature information indicates features of the candidate address. The communication ID is information for identifying the communication partner in the communication system 100. Examples of the communication ID include, but are not limited to, identification information of the terminal apparatuses 10 and 70, user identification information and accounts of the terminal apparatuses 10 and 70, and the like. Note that the presence will be described later in detail.

FIG. 7B is a conceptual diagram illustrating a presence management table stored in the presence management DB 7002. In the presence management table, feature information, presence, a call-available communication ID, and a during-call communication ID are associated with each other for management. The feature information indicates a feature of a candidate address. The presence is synthesized presence of candidate addresses of the feature. The call-available communication ID is of a terminal apparatus 10 whose presence is "online" among the candidate addresses of the feature. The during-call communication ID is of a terminal apparatus 10 whose presence is "chat" among the candidate addresses of the feature. Note that a process for synthesizing the presence of the candidate addresses to generate the presence of a feature will be described later.

FIG. 7C is a conceptual diagram illustrating a destination management table stored in the destination management DB 7003. The terminal apparatus 70 is used by a guest, and the terminal apparatus 10 is used by an operator. The terminal apparatus 70 can transmit a request for starting a call to a plurality of terminal apparatuses 10 at the same timing. The destination management table manages the communication IDs of the terminal apparatuses 10 as current destinations of a request for starting a call, transmitted by the terminal apparatus 70. Through a process in which the terminal apparatus 70 transmits a request for starting a call and a process in which the terminal apparatus 70 cancels the request for starting a call, the number of communication IDs managed in the destination management table varies.

### Functional Configuration of Management System

Referring back to FIG. 6, the management system 50 includes a transmission/reception unit 51, an authentication unit 52, a management unit 53, a session control unit 54, and a storing/reading processing unit 59. These units are functions implemented by any of the components illustrated in FIG. 4 operating in response to instructions from the CPU 201 in accordance with a program for the management system 50 loaded from the HD 204 into the RAM 203. In addition, the management system 50 further includes a storage 5000 established by the HD 204. Furthermore, in the storage 5000, DBs are established by using the following tables.

FIG. 7D is a conceptual diagram illustrating an authentication management table stored in an authentication management DB 5001. In the authentication management table, communication IDs of all the terminal apparatuses 10 and the terminal apparatuses 70 managed by the management system 50 and authentication passwords are associated with each other for management.

FIG. 7E is a conceptual diagram illustrating a terminal management table stored in a terminal management DB 5002. In the terminal management table, IP addresses of the terminal apparatuses 10 and the terminal apparatuses 70 are associated with the respective communication IDs of the terminal apparatuses 10 and the terminal apparatuses 70 for management.

### Functions of Management System

Next, the functions of the management system 50 will be described in detail. The transmission/reception unit 51 is implemented by instructions from the CPU 201 and the network I/F 209, and transmits and receives various kinds of data (or information) to and from terminals, apparatuses, or systems via the communication network 2.

The authentication unit 52 is implemented by instructions from the CPU 201, searches the authentication management table by using a communication ID and a password received by the transmission/reception unit 51 as search keys, and determines whether the same communication ID and the same password are managed in the authentication management table so as to authenticate a terminal.

The management unit 53 is implemented by instructions from the CPU 201, and records information of the terminal apparatuses 10 and the terminal apparatus 70 in the terminal management table illustrated in FIG. 7E so as to manage the terminal apparatuses 10 and the terminal apparatus 70.

The session control unit 54 controls a session for transmitting content data between a terminal apparatus 10 and the terminal apparatus 70 in response to a command from the CPU 201. This control includes control for establishing a session, control for causing the terminal apparatus 10 and the terminal apparatus 70 to participate in an established session, control for causing the terminal apparatus 10 and the terminal apparatus 70 to exit from a session, and the like.

The storing/reading processing unit 59 is implemented by instructions from the CPU 201 and the HDD 205, or is implemented by instructions from the CPU 201, and stores various kinds of data in the storage 5000 or extracts various kinds of data stored in the storage 5000.

### Processes and Operations of Communication System

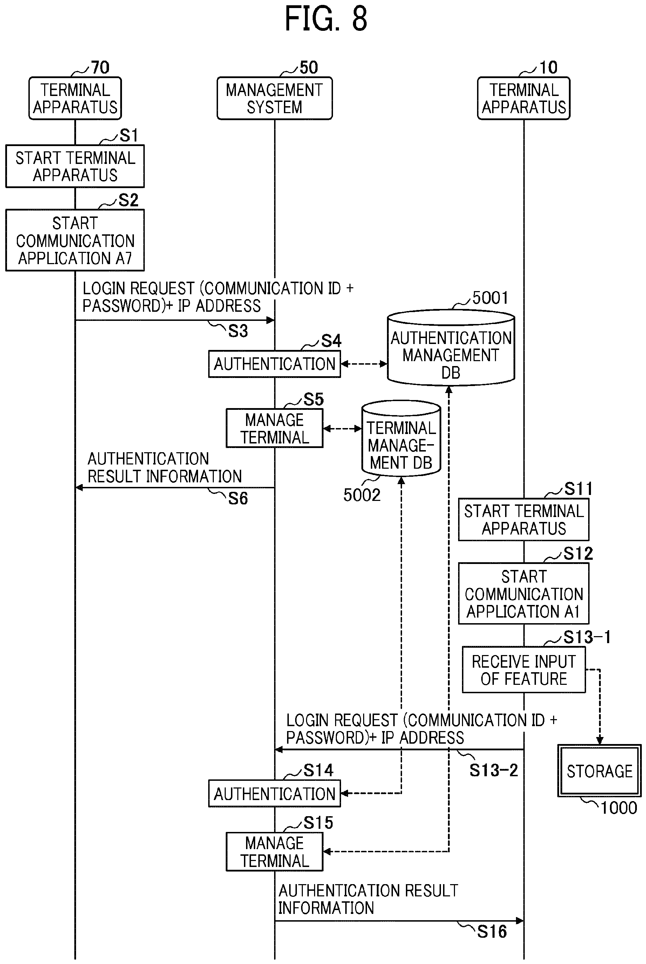

Next, a process in which the terminal apparatus 10 and the terminal apparatus 70 log in to the management system 50 will be described with reference to FIG. 8. FIG. 8 is a sequence diagram illustrating the process in which the terminal apparatus 10 and the terminal apparatus 70 log in to the management system 50.

If, for example, a staff at the store 7 turns on the power switch of the terminal apparatus 70, the operation input receiving unit 72 receives the turning on and starts the terminal apparatus 70 (step S1). Upon the start of the terminal apparatus 70, the starting unit 73 starts guest application software A7 installed in the terminal apparatus 70 (step S2). In the following description, a process in the terminal apparatus 70 is performed in accordance with commands from the guest application software A7.

The transmission/reception unit 71 of the terminal apparatus 70 transmits a login request to the management system 50 via the communication network 2 (step S3). The login request includes the communication ID for identifying the terminal apparatus 70 as a login requesting apparatus and a password. In this embodiment, the communication ID of the terminal apparatus 70 is represented by a character string starting with "C". In the following description, the terminal apparatus 70x and the terminal apparatus 70y respectively have communication IDs "C01" and "C02".

The transmission/reception unit 51 of the management system 50 receives the login request. Transmission of the login request from the terminal apparatus 70 to the management system 50 enables the management system 50 as a receiver to acquire the IP address of the terminal apparatus 70 as a transmitter.

Subsequently, by using as search keys, the communication ID and the password included in the login request, the authentication unit 52 of the management system 50 searches the authentication management table illustrated in FIG. 7D in the storage 5000 and determines whether the same communication ID and the same password are managed in the authentication management table so as to authenticate the terminal apparatus 70 (step S4).

If the authentication unit 52 authenticates the login request from the terminal apparatus 70 as a login request from an authorized apparatus, the management unit 53 records, in the terminal management table illustrated in FIG. 7E, the communication ID and the IP address of the terminal apparatus 70 as the login requesting apparatus in association with each other (step S5).

The transmission/reception unit 51 of the management system 50 transmits authentication result information indicating the result of authentication by the authentication unit 52, to the terminal apparatus 70 as the login requesting apparatus via the communication network 2 (step S6). Thus, the transmission/reception unit 71 of the terminal apparatus 70 receives the authentication result information. In a case described below, the terminal apparatus 70x and the terminal apparatus 70y as login requesting apparatuses are successfully authenticated, and the terminal apparatus 70x and the terminal apparatus 70y log in to the management system 50.

On the other hand, if an operator of the terminal apparatus 10 for operators turns on the power switch of the terminal apparatus 10, the operation input receiving unit 12 receives the turning on and starts the terminal apparatus 10 (step S11). Upon the start of the terminal apparatus 10, the starting unit 13 starts the operator application software A1 installed in the terminal apparatus 10 (step S12). In the following description, a process in the terminal apparatus 10 is performed in accordance with commands from the operator application software A1.

The image outputting unit 17 of the terminal apparatus 10 outputs, to the display 720, a reception screen for receiving inputs of features from the operator who uses the terminal apparatus 10.

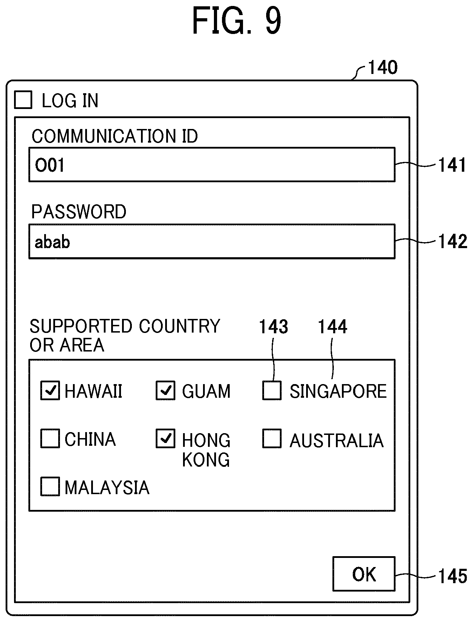

FIG. 9 illustrates an example of the reception screen. A reception screen 140 includes a field 141 and a field 142, which respectively receive input of the communication ID and input of the password. The reception screen 140 further includes, as a feature to be input by the operator, alternatives 144 of a supported country or area to be explained as a destination for travel, and checkboxes 143 for selection. Upon the operator's selection of a supported country or area and depression of an OK button 145 on the reception screen 140, the operation input receiving unit 12 receives input of a feature from the operator (step S13-1).

The storing/reading processing unit 29 stores feature information corresponding to the selected features in the storage unit 1000. In the following description, pieces of feature information corresponding to the features "Hawaii", "Guam", "Singapore", "China", "Hong Kong", "Australia", and "Malaysia" are respectively expressed as "hw", "gm", "sg", "ch", "hk", "at", and "my".

The terminal apparatus 10 transmits a login request to the management system 50 and logs in to the management system 50 (steps S13-2, S14, S15, and S16). This process is the same or substantially the same as the process in steps S3, S4, S5, and S6 performed between the terminal apparatus 70 and the management system 50, and therefore a description thereof is omitted. Note that the communication ID transmitted from the terminal apparatus 10 to the management system 50 in the login request starts with "O" in order to be distinguished as the terminal apparatus 10 for operators. In the following description, the communication IDs of the terminal apparatus 10a, 10b, and 10c are respectively "O01", "O02", and "O03". If the terminal apparatus 10a, 10b, and 10c as login requesting apparatuses are successfully authenticated, the terminal apparatus 10a, 10b, and 10c log in to the management system 50.

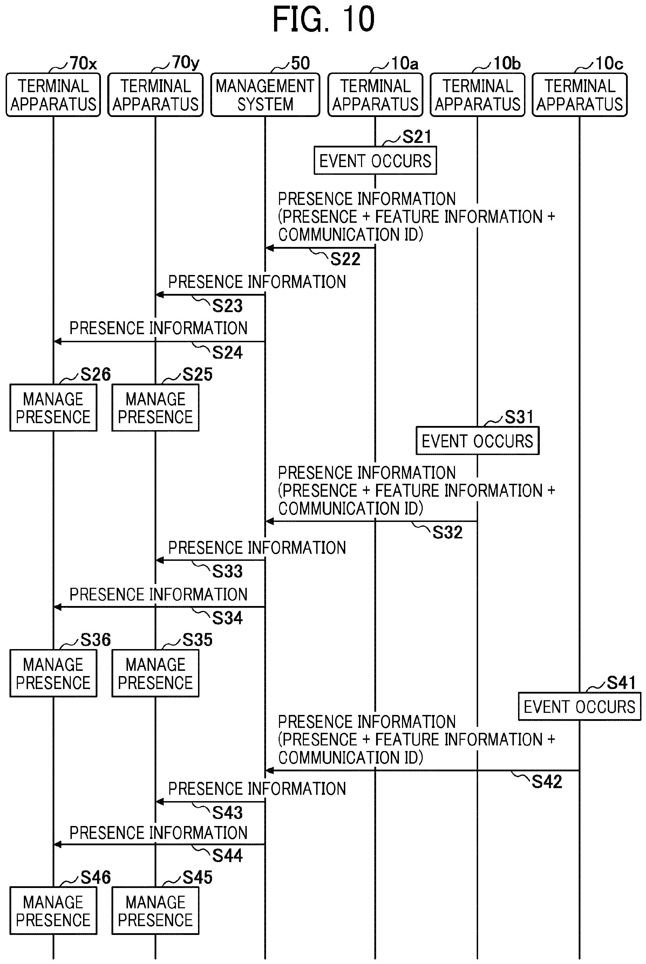

Next, a process in which the terminal apparatus 10 transmits presence information indicating the status of the operator to the terminal apparatus 70 will be described with reference to FIG. 10. FIG. 10 is a sequence diagram illustrating an example of the process for transmitting the presence information.

The operator application software A1 manages, in the storage unit 1000, an event as a trigger of status transition and presence after transition in response to occurrence of the event. The presence is used for determining whether the operator who uses the terminal apparatus 10 is able to start a call (status in which start of a call is allowed). The presence indicating the status in which start of a call is allowed includes "online" indicating a status in which the terminal apparatus 10 has logged in to the management system 50 and is not communicating with the terminal apparatus 70 for guests. The presence indicating a status in which start of a call is not allowed includes "offline" indicating a status in which the terminal apparatus 10 has not logged in to the management system 50 and "chat" indicating a status in which the terminal apparatus 10 has logged in to the management system 50 but is already communicating with the terminal apparatus 70 for a customer and thus is incapable of starting a new call. Note that the presence is not limited to the above ones. For example, the presence may include one based on inputs from a user. Among examples of the presence based on inputs from the user, an example of the presence indicating the status in which start of a call is not allowed is "away".

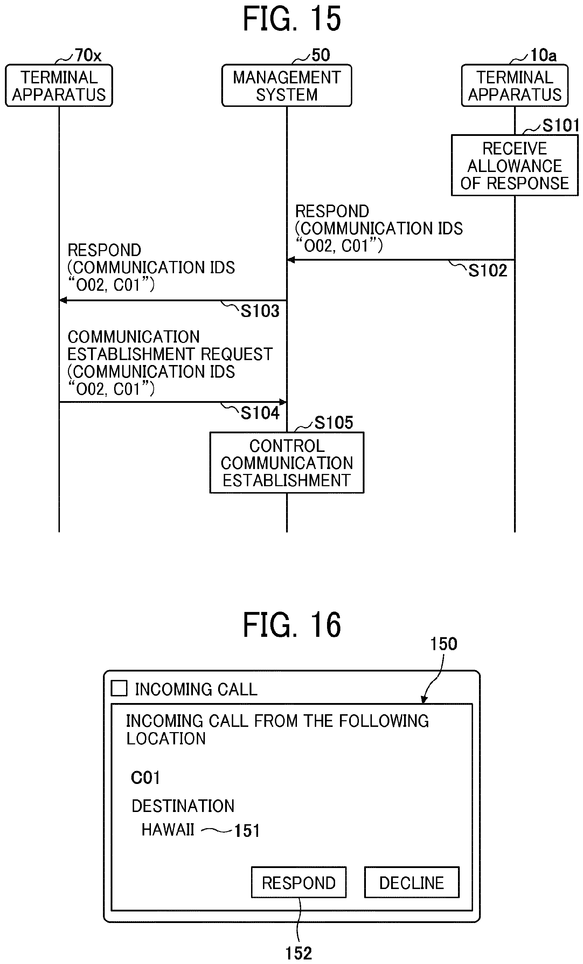

Examples of an event as a trigger of transition to the presence "online" include reception by the terminal apparatus 10 of the authentication result information in step S16 described above, reception of input of a request for ending a call from the user, and the like. Examples of an event as a trigger of transition to the presence "offline" include logout of the terminal apparatus 10 from the management system 50. Examples of an event as a trigger of transition to the presence "chat" include establishment of communication between the terminal apparatus 70 and the terminal apparatus 10 (step S105 in FIG. 15 as will be described later). Note that events as a trigger of transition of the presence are not limited to particular events as long as the events are detectable, and may be freely set in accordance with a communication protocol or details of processes of application software.

If any one of the above events occurs in the terminal apparatus 10a (step S21), the storing/reading processing unit 29 reads the feature information from the storage unit 1000. The feature information to be read corresponds to the features that are input on the reception screen 140 in FIG. 9 by the operator who uses the terminal apparatus 10a at the time of login, such as "Hawaii", "Guam", and "Singapore". The transmission/reception unit 11 of the terminal apparatus 10a transmits, to the management system 50, presence information including the presence, the feature information, and the communication ID "O01" of the terminal apparatus 10a as a transmitter (step S22). The presence indicates the status after transition in response to occurrence of the event in step S21. The feature information is read from the storage unit 1000. For example, in response to reception of the authentication result information in step S16, the terminal apparatus 10a transmits the presence information including the presence "online" to the management system 50. In addition, in response to reception of a request for logout, the terminal apparatus 10a transmits the presence information including the presence "offline" to the management system 50. Furthermore, in response to establishment of communication with the terminal apparatus 70, the terminal apparatus 10a transmits the presence information including the presence "chat" to the management system 50. Note that if the feature information is not updated after the feature information is recorded in the storage unit 1000 in step S13-1, the terminal apparatus 10a transmits the presence information including the same feature information to the management system 50 each time an event occurs.

In response to reception of the presence information transmitted from the terminal apparatus 10a, the transmission/reception unit 51 of the management system 50 transmits the received presence information to the terminal apparatus 70x and the terminal apparatus 70y at the store 7, the terminal apparatus 70x and the terminal apparatus 70y having logged in to the management system 50 (steps S23 and S24). The method for identifying the terminal apparatus 70 at the store, the terminal apparatus 70 having logged in to the management system 50, is not limited to a particular method, but may be, for example, a method for reading the communication ID starting with "C" from the terminal management table in FIG. 7E.

The transmission/reception unit 71 of the terminal apparatus 70x and the transmission/reception unit 71 of the terminal apparatus 70y receive the presence information transmitted from the terminal apparatus 10a at the call center 8 through the management system 50. The storing/reading processing unit 89 of the terminal apparatus 70x and the storing/reading processing unit 89 of the terminal apparatus 70y record the communication ID, presence, and feature information included in the received presence information, in association with each other, in the address management table in FIG. 7A (steps S25 and S26). If a record of the same communication ID as the communication ID included in the received presence information is present in the address management table, on the basis of the newly received presence information, the storing/reading processing unit 89 overwrites and updates the presence recorded in this record. Thus, the terminal apparatus 70x and the terminal apparatus 70y can manage the latest presence of the terminal apparatus 10a.

In response to occurrence of any of the above events in the terminal apparatus 10b for operators, among the terminal apparatus 10b, the management system 50, the terminal apparatus 70x, and the terminal apparatus 70y, the same or substantially the same process as steps S21, S22, S23, S24, S25, and S26 among the terminal apparatus 10a, the management system 50, the terminal apparatus 70x, and the terminal apparatus 70y is performed (steps S31, S32, S33, S34, S35, and S36). In response to occurrence of any of the above events in the terminal apparatus 10c for operators, among the terminal apparatus 10c, the management system 50, the terminal apparatus 70x, and the terminal apparatus 70y, the same or substantially the same process as steps S21, S22, S23, S24, S25, and S26 among the terminal apparatus 10a, the management system 50, the terminal apparatus 70x, and the terminal apparatus 70y is performed (steps S41, S42, S43, S44, S45, and S46). Thus, the terminal apparatus 70x and the terminal apparatus 70y can manage the latest presence of the terminal apparatuses 10b and 10c.

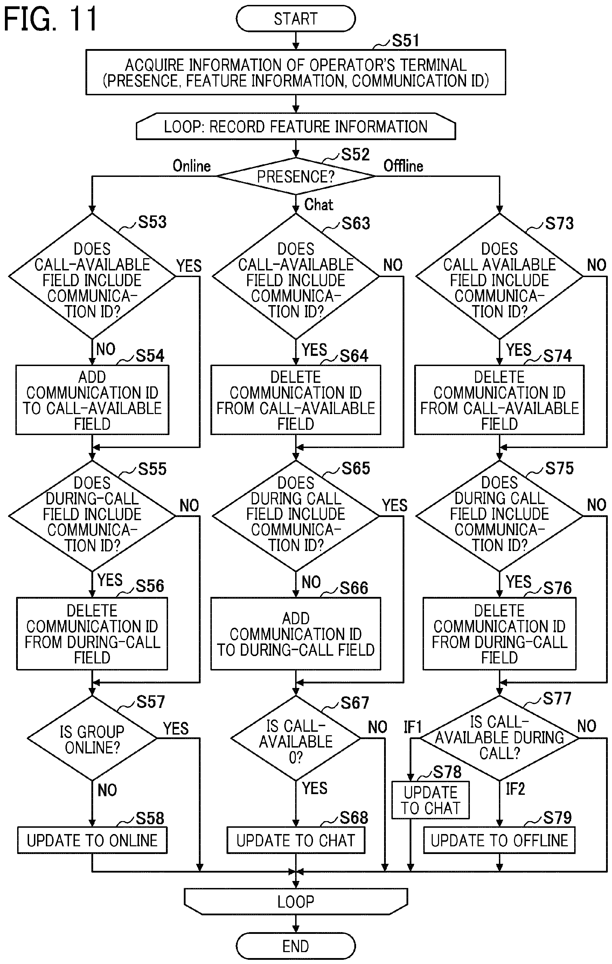

Next, a process for managing the presence of each feature will be described with reference to FIG. 11. FIG. 11 is a flowchart illustrating an example of the process for managing the presence of each feature. In the following description, it is assumed that the guest requests a call to the operator, and the operator will be referred to as a candidate address. Note that if the operator as a candidate address selects a plurality of features (e.g., "Hawaii", "Guam", and "Singapore") in step S13-1, the candidate address belongs to a plurality of feature groups. The presence "online" of a feature indicates that any of candidate addresses for this feature is in the presence "online" in which a call is available. The presence "chat" of a feature indicates that none of the candidate addresses of this feature group is in the presence "online", and that one or more candidate addresses in the presence "chat" during a call are included.

The presence "offline" of a feature indicates that all the candidate addresses of this feature are in the presence "offline". Although a process of the terminal apparatus 70x will be described below, the terminal apparatus 70y can also perform the same or substantially the same process.

Each time the presence in the address management table illustrated in FIG. 7A is updated in steps S26, S36, and S46, the status managing unit 81 of the terminal apparatus 70x acquires the communication ID, presence, and feature information recorded in the updated record (step S51).

The status managing unit 81 of the terminal apparatus 70x updates, in the presence management table illustrated in FIG. 7B, records including the feature information acquired in step S51. That is, if the feature information "hw, gm, hk" is acquired in step S51, the status managing unit 81 updates records including the feature information "hw, gm, hk" in the presence management table.

Now, as an example, a process performed when the presence information "online, (hw, gm, hk), O01" is transmitted from the terminal apparatus 10a to the terminal apparatus 70x and is acquired in step S51 will be described ("Online" in step S52).

First, a process for updating records in which the feature information "hw" is recorded in the presence management table in loop processing will be described. The status managing unit 81 of the terminal apparatus 70x refers to the field of the call-available communication ID in the records in which the feature information "hw" is recorded in the presence management table. Thus, the status managing unit 81 determines whether the field of the call-available communication ID includes the communication ID "O01" acquired in step S51 (step S53).

If it is determined that the field of the call-available communication ID in the presence management table does not include the communication ID "O01" acquired in step S51 (NO in step S53), the status managing unit 81 adds the acquired communication ID "O01" to the field of the call-available communication ID (step S54).

If step S54 is completed, or if step S53 is YES, the status managing unit 81 of the terminal apparatus 70x refers to the field of the during-call communication ID in the records in which the feature information "hw" is recorded in the presence management table. Thus, the status managing unit 81 determines whether the field of the during-call communication ID includes the communication ID "O01" acquired in step S51 (step S55).

If it is determined that the field of the during-call communication ID in the presence management table includes the communication ID "O01" acquired in step S51 (YES in step S55), the acquired communication ID is deleted from the field of the during-call communication ID (step S56). Through the above process, in a case where the presence of the terminal apparatus 10a transitions from "chat" to "online" and in a case where the presence of the terminal apparatus 10a transitions from "offline" to "online", the communication ID of the terminal apparatus 10a is recorded in the field of the call-available communication ID in the records in which the feature information "hw" is recorded in the presence management table.

If step S56 is completed, or if step S55 is NO, the status managing unit 81 of the terminal apparatus 70x refers to the presence of the feature in the records in which the feature information "hw" is recorded in the presence management table. Thus, the status managing unit 81 determines whether the presence of the group is "online" (step S57).

If it is determined that the presence of the feature in the records in which the feature information "hw" is recorded is not "online" (NO in step S57), the status managing unit 81 updates the presence of the feature to "online". If it is determined that the presence of the feature in the records in which the feature information "hw" is recorded is "online" (YES in step S57), the status managing unit 81 does not update the presence of the feature in the records in which the feature information "hw" is recorded. Through the above process, the presence of the feature in the records in which the feature information "hw" is recorded in the presence management table is set to "online".

Since the feature information "hw, gm, hk" has been acquired in step S51, the status managing unit 81 similarly updates records in which the feature information "gm, hk" is recorded in the presence management table through loop processing. Upon completion of the loop processing, the presence management table in FIG. 7B is updated as in Table 1.

**Table 1: Presence Management Table**

| Feature Information | Presence Information | Call-Available Communication ID | During-Call Communication ID |
|---|---|---|---|
| hw | online | O01, O02, O03 | |
| gm | chat | O01 | |
| sg | online | O03 | |
| ch | online | O02, O03 | |
| hk | online | O01, O02 | |
| at | online | O02 | |
| my | online | O02 | |

Subsequently, a process performed when the presence information "chat, (hw, gm, hk), O01" is transmitted from the terminal apparatus 10a to the terminal apparatus 70x and is acquired in step S51 will be described ("Chat" in step S52).

First, a process for updating records in which the feature information "hw" is recorded in the presence management table in loop processing will be described. The status managing unit 81 of the terminal apparatus 70x refers to the field of the call-available communication ID in the records in which the feature information "hw" is recorded in the presence management table (see Table 1). Thus, the status managing unit 81 determines whether the field of the call-available communication ID includes the communication ID "O01" acquired in step S51 (step S63).

If it is determined that the field of the call-available communication ID in the presence management table includes the communication ID "O01" acquired in step S51 (YES in step S63), the acquired communication ID "O01" is deleted from the field of the call-available communication ID (step S64).

If step S64 is completed, or if step S63 is NO, the status managing unit 81 of the terminal apparatus 70x refers to the field of the during-call communication ID in the records in which the feature information "hw" is recorded in the presence management table (see Table 1). Thus, the status managing unit 81 determines whether the field of the during-call communication ID includes the communication ID "O01" acquired in step S51 (step S65). If it is determined that the field of the during-call communication ID in the presence management table does not include the communication ID "O01" acquired in step S51 (NO in step S65), the acquired communication ID "O01" is added to the field of the during-call communication ID (step S66). Through the above process, the communication ID of the terminal apparatus 10a is recorded in the field of the during-call communication ID in the records in which the feature information "hw" is recorded in the presence management table.

If step S66 is completed, or if step S65 is YES, the status managing unit 81 of the terminal apparatus 70x refers to the field of the call-available communication ID in the records in which the feature information "hw" is recorded in the presence management table (see Table 1). Thus, the status managing unit 81 determines whether the number of communication IDs recorded in the field of the call-available communication ID in the records in which the feature information "hw" is recorded is zero (step S67).

If the number of communication IDs recorded in the field of the call-available communication ID in the records in which the feature information "hw" is recorded is zero (YES in step S67), the status managing unit 81 updates the presence of the feature in the records in which the feature information "hw" is recorded to "chat" (step S68).

If the number of communication IDs recorded in the field of the call-available communication ID in the records in which the feature information "hw" is recorded is not zero (NO in step S67), the status managing unit 81 does not update the presence of the feature in the records in which the feature information "hw" is recorded. That is, if a communication ID is recorded in the field of the call-available communication ID in the records in which the feature information "hw" is recorded, the corresponding presence remains "online" and is not updated.

Since the feature information "hw, gm, hk" has been acquired in step S51, the status managing unit 81 similarly updates records in which the feature information "gm, hk" is recorded in the presence management table through loop processing. Thus, the presence management table in Table 1 becomes as in Table 2.

**Table 2: Presence Management Table**

| Feature Information | Presence Information | Call-Available Communication ID | During-Call Communication ID |
|---|---|---|---|
| hw | online | O02, O03 | O01 |
| gm | chat | | O01 |
| sg | online | O03 | |
| ch | online | O02, O03 | |
| hk | online | O02 | O01 |
| at | online | O02 | |
| my | online | O02 | |

Subsequently, a process performed when the presence information "offline, (hw, sg, ch), O03" is transmitted from the terminal apparatus 10c to the terminal apparatus 70x and is acquired in step S51 will be described ("Offline" in step S52).

First, a process for updating records in which the feature information "hw" is recorded in the presence management table in loop processing will be described. The status managing unit 81 of the terminal apparatus 70x refers to the field of the call-available communication ID in the records in which the feature information "hw" is recorded in the presence management table (see Table 2). Thus, the status managing unit 81 determines whether the field of the call-available communication ID includes the communication ID "O03" acquired in step S51 (step S73).

If it is determined that the field of the call-available communication ID in the presence management table includes the communication ID "O03" acquired in step S51 (YES in step S73), the acquired communication ID "O03" is deleted from the field of the call-available communication ID (step S74).

If step S74 is completed, or if step S73 is NO, the status managing unit 81 of the terminal apparatus 70x refers to the field of the during-call communication ID in the records in which the feature information "hw" is recorded in the presence management table (see Table 2). Thus, the status managing unit 81 determines whether the field of the during-call communication ID includes the communication ID "O03" acquired in step S51 (step S75).

If it is determined that the field of the during-call communication ID in the presence management table includes the communication ID "O03" acquired in step S51 (YES in step S75), the acquired communication ID "O03" is deleted from the field of the during-call communication ID (step S76). Through the above process, the communication ID of the terminal apparatus 10c is deleted from the records in which the feature information "hw" is recorded in the presence management table.

If step S76 is completed, or if step S75 is NO, the status managing unit 81 of the terminal apparatus 70x refers to the fields of the call-available communication ID and the during-call communication ID in the records in which the feature information "hw" is recorded in the presence management table (see Table 2). Thus, the status managing unit 81 determines whether a condition IF1 or a condition IF2 is satisfied (step S77). The condition IF1 is a case where the number of communication IDs recorded in the field of the call-available communication ID in the records in which the feature information "hw" is recorded is zero and where the number of communication IDs recorded in the field of the during-call communication ID is not zero. The condition IF2 is a case where the number of communication IDs recorded in the field of the call-available communication ID in the records in which the feature information "hw" is recorded is zero and where the number of communication IDs recorded in the field of the during-call communication ID is zero.

If the number of communication IDs recorded in the field of the call-available communication ID in the records in which the feature information "hw" is recorded is zero and where the number of communication IDs recorded in the field of the during-call communication ID is not zero (IF1 in step S77), the status managing unit 81 updates the presence of the feature in the records in which the feature information "hw" is recorded in the presence management table to "chat" (step S78).

If the number of communication IDs recorded in the field of the call-available communication ID in the records in which the feature information "hw" is recorded is zero and where the number of communication IDs recorded in the field of the during-call communication ID is zero (IF2 in step S77), the status managing unit 81 updates the presence of the feature in the records in which the feature information "hw" is recorded in the presence management table to "offline" (step S79).

If neither the condition IF1 nor the condition IF2 is satisfied in step S77 (NO in step S77), the status managing unit 81 does not update the presence of the feature in the records in which the feature information "hw" is recorded, and the presence remains "online".

Since the feature information "hw, sg, ch" has been acquired in step S51, the status managing unit 81 similarly updates records in which the feature information "sg, ch" is recorded in the presence management table through loop processing. Thus, the presence management table in Table 2 becomes as in Table 3.

**Table 3: Presence Management Table**

| Feature Information | Presence Information | Call-Available Communication ID | During-Call Communication ID |
|---|---|---|---|
| hw | online | O02, O03 | O01 |
| gm | chat | | O01 |
| sg | online | | |
| ch | online | O02 | |
| hk | online | O02 | O01 |
| at | online | O02 | |
| my | online | O02 | |

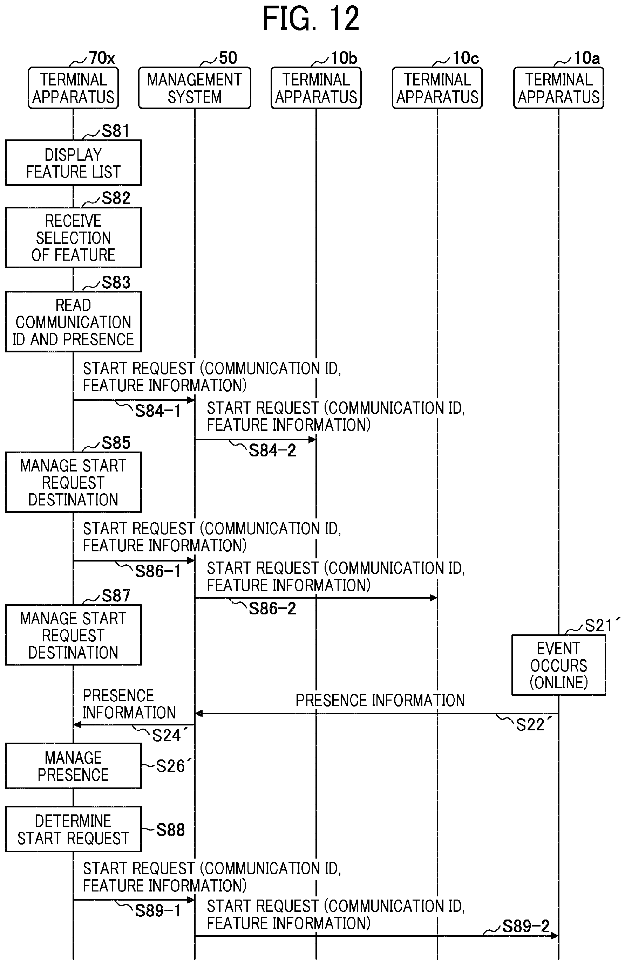

Next, a process for starting communication will be described with reference to FIG. 12. FIG. 12 is a sequence diagram illustrating an example of the process for starting communication. Although, as an example, a process in which the terminal apparatus 70x starts communication will be described below, the terminal apparatus 70y can also start communication through the same or substantially the same process. In the following case, at the time of start of the process in FIG. 12, the address management table is in the state of FIG. 7A, and the presence management table is in the state of Table 2.

The operation input receiving unit 72 of the terminal apparatus 70x receives a display request of a feature list of candidate addresses in accordance with operation input by a user. In accordance with the display request, the image outputting unit 77 acquires the pieces of feature information recorded in the presence management table (see Table 2) and a presence set of groups corresponding to the pieces of feature information. The storage 7000 stores in advance data of display images corresponding to the pieces of feature information and of display images corresponding to the presence of the features. As an example, the data of the display image corresponding to the feature information "hw" is text data representing "Hawaii", and as an example, the data of display images corresponding to the presence "online", "offline", and "chat" of the feature is data of images of icons respectively representing a checkmark, no image, and a balloon. For each piece of the acquired feature information and presence set, the image outputting unit 77 acquires the corresponding text data and an icon display image data set from the storage 7000. The image outputting unit 77 aligns the acquired display image data set in the same row of a predetermined display region in association, thereby generating image data of the feature list. The image outputting unit 77 outputs the generated image data of the feature list to the display 720 (step S81).

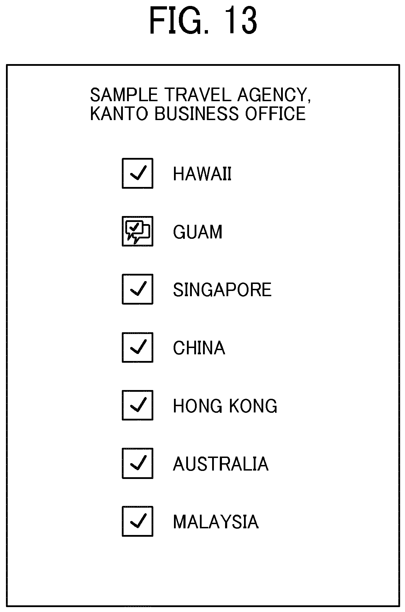

FIG. 13 illustrates an example of a screen of the feature list displayed when the presence management table is in the state of Table 2.

Each time the presence management table is updated, the image outputting unit 77 repeatedly performs the above process. Thus, the feature list displayed on the display 720 includes the latest presence of each feature.

In step S81, from among the icons, the image outputting unit 77 outputs an icon for which the checkmark corresponding to "online" is displayed as a selectable icon, and outputs icons for which no image and the balloon corresponding to "offline" and "chat" are displayed as unselectable icons. For example, even if a user depresses an icon for which a balloon corresponding to "Guam" in the feature list illustrated in FIG. 13 is displayed, the operation input receiving unit 72 does not receive operation input. If a user depresses an icon for which no image or a balloon is displayed, the image outputting unit 77 may output to the display 720, a message indicating that the user is not allowed to start a call or a message prompting the user to wait for the start of a call, for example.

If the user depresses, on the screen illustrated in FIG. 13, an icon for which a checkmark corresponding to any of the features is displayed, the operation input receiving unit 72 receives selection of the feature corresponding to the icon (step S82). In the following description, a process performed if selection of the feature "Hawaii" is received will be described.

Upon reception of selection of the feature "Hawaii", the storing/reading processing unit 89 searches the address management table in FIG. 7A by using as a search key, the feature information "hw" indicating the feature selected in step S82, and reads the corresponding communication ID and presence sets "O01, chat", "O02, online", and "O03, online" (step S83).

The transmission/reception unit 71 of the terminal apparatus 70x transmits a call start request to the management system 50 (step S84-1). The call start request includes, from among the communication IDs read in step S83, the communication ID "O02" for which the corresponding presence is "online", the communication ID "C01" of the terminal apparatus 70x, and the feature information "hw" indicating the feature selected in S82.

Similarly, the transmission/reception unit 71 of the terminal apparatus 70x transmits a call start request to the management system 50 (step S86-1). The call start request includes, from among the communication IDs read in step S83, the communication ID "O03" for which the corresponding presence is "online", the communication ID "C01" of the terminal apparatus 70x, and the feature information "hw" indicating the feature selected in S82.

Upon reception of the call start request transmitted from the terminal apparatus 70x, the transmission/reception unit 51 of the management system 50 transmits the call start request to the terminal apparatus 10b identified by the communication ID "O02" included in the call start request (step S84-2). Similarly, upon reception of the call start request transmitted from the terminal apparatus 70x, the transmission/reception unit 51 of the management system 50 transmits the call start request to the terminal apparatus 10c identified by the communication ID "O03" included in the call start request (step S86-2).

The transmission control unit 82 of the terminal apparatus 70x records the communication ID "O02" of the terminal apparatus 10b, which is the destination of the call start request, in the destination management table so as to update the destination management table (step S85). Similarly, the transmission control unit 82 of the terminal apparatus 70x records the communication ID "O03" of the terminal apparatus 10c, which is the destination of the call start request, in the destination management table so as to update the destination management table (step S87).

If the terminal apparatus 10a for operators receives input of a call end request (step S21'), the transmission/reception unit 11 transmits presence information to the management system 50 (step S22'). The presence information includes the feature information "hw, gm, hk" read from the storage unit 1000, the communication ID "O01" of the terminal apparatus 10a, and the presence "online".

Upon reception of the presence information transmitted from the terminal apparatus 10a, the transmission/reception unit 51 of the management system 50 transmits the received presence information to the terminal apparatus 70x for guests, which has logged in to the management system 50 (step S24').

The transmission/reception unit 71 of the terminal apparatus 70x receives the presence information transmitted from the terminal apparatus 10a for operators through the management system 50. The storing/reading processing unit 89 of the terminal apparatus 70x records the communication ID, presence, and feature information included in the received presence information, in the address management table (step S26'). Thus, the address management table is updated from the state of FIG. 7A to the state of Table 4.

**Table 4: Address Management Table**

| Communication ID | Presence | Feature Information |
|---|---|---|
| O01 | online | hw, gm, hk |
| O02 | online | hw, hk, ch, my, at |
| O03 | online | hw, sg, ch |

The transmission control unit 82 of the terminal apparatus 70x determines whether the call start request is to be transmitted to the terminal apparatus 10a that has transmitted the presence information received in step S24' (step S88). Through this process, the transmission control unit 82 of the terminal apparatus 70x refers to the presence of the terminal apparatus 10a updated in the address management table so as to determine whether the presence is "online". If the presence of the terminal apparatus 10a is not "online", the transmission control unit 82 determines that the call start request is not to be transmitted, and ends the process.

If it is determined that the presence of the terminal apparatus 10a is "online", the transmission control unit 82 refers to the feature information "hw, gm, hk" of the terminal apparatus 10a in the address management table so as to determine whether any piece of the feature information indicates the feature "Hawaii" selected in step S82. If no piece of the feature information indicates the selected feature, the transmission control unit 82 determines that the start request is not to be transmitted, and ends the process.

If any piece of the feature information indicates the selected feature, the transmission control unit 82 of the terminal apparatus 70x determines that the start request is to be transmitted. In accordance with the determination that the start request is to be transmitted, the transmission/reception unit 71 of the terminal apparatus 70x transmits the call start request to the management system 50 (step S89-1). The call start request includes the communication ID "O01" of the terminal apparatus 10a that is the destination of the presence information, the communication ID "C01" of the terminal apparatus 70x, and the feature information "hw" indicating the feature selected in step S82.

Upon reception of the call start request transmitted from the terminal apparatus 70x, the transmission/reception unit 51 of the management system 50 transmits the call start request to the terminal apparatus 10a identified by the communication ID "O01" included in the call start request (step S89-2).

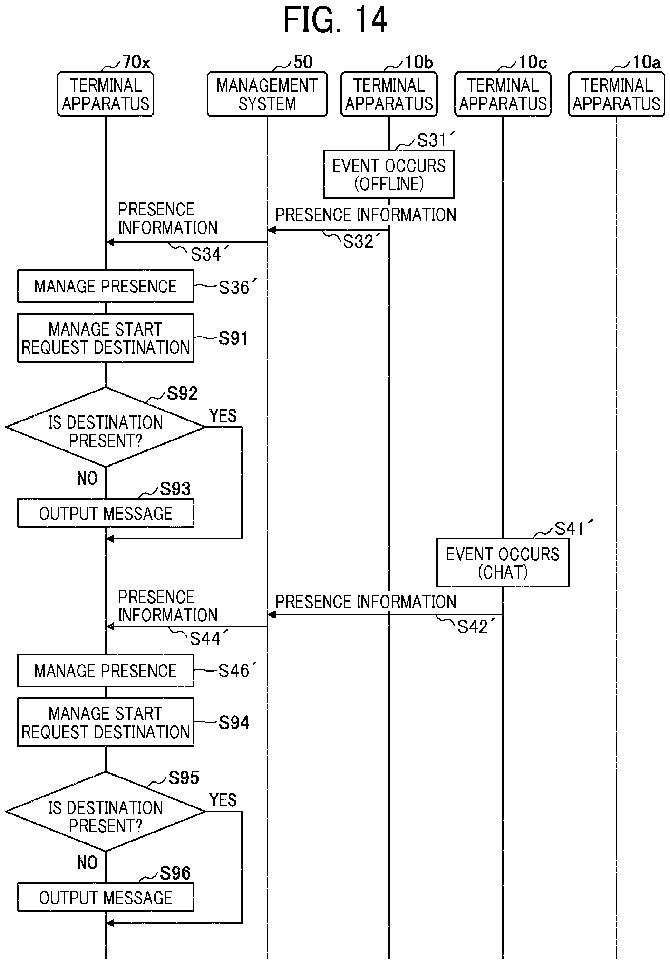

Next, a process for updating the destination of the call start request in the terminal apparatus 70x will be described with reference to FIG. 14. FIG. 14 is a sequence diagram illustrating an example of the process for updating the destination of the call start request.

First, a process performed when an offline process is performed in the terminal apparatus 10b that is the destination of the call start request will be described. If the operation input receiving unit 12 of the terminal apparatus 10b receives offline operation input (step S31'), the transmission/reception unit 11 transmits presence information to the management system 50 (step S32'). The presence information includes feature information "hw, hk, ch, my, at" read from the storage unit 1000, the communication ID "O02" of the terminal apparatus 10b, and the presence "offline".

In response to reception of the presence information transmitted from the terminal apparatus 10b, the transmission/reception unit 51 of the management system 50 transmits the received presence information to the terminal apparatus 70x for a customer, which has logged in to the management system 50 (step S34').

The transmission/reception unit 71 of the terminal apparatus 70x receives the presence information transmitted from the terminal apparatus 10b for operators through the management system 50. The storing/reading processing unit 89 of the terminal apparatus 70x records the communication ID, presence, and feature information included in the received presence information, in association with each other in the address management table (step S36').

If the presence of the terminal apparatus 10b is changed to "offline", the terminal apparatus 10b is no longer capable of responding the call start request from the terminal apparatus 70x. Thus, the transmission control unit 82 of the terminal apparatus 70x deletes the communication ID "O02" of the terminal apparatus 10b from the destination management table to update the destination management table (step S91).

The transmission control unit 82 of the terminal apparatus 70x determines whether the communication ID of the destination of the call start request is recorded in the updated destination management table (step S92).

If no communication ID of the destination of the call start request is recorded in the updated destination management table as a result of deletion of the communication ID "O02" of the terminal apparatus 10b that has transmitted the presence information (NO in step S92), the image outputting unit 77 causes the display 720 to output a message indicating the failure of connection to the operator (step S93). Note that if the communication ID of the destination of the call start request is recorded in the updated destination management table, the terminal apparatus 70x may be connected to the remaining destination of the call start request, and thus the image outputting unit 77 does not output the message.

Subsequently, a process performed when the terminal apparatus 10c that is the destination of the call start request starts communication with the terminal apparatus 70 that is different from the terminal apparatus 70x will be described. If communication between the terminal apparatus 10c and the terminal apparatus 70 that is different from the terminal apparatus 70x is established (step S41'), the transmission/reception unit 11 of the terminal apparatus 10c transmits presence information to the management system 50 (step S42'). The presence information includes feature information "hw, sg, ch" read from the storage unit 1000, the communication ID "O03" of the terminal apparatus 10c, and the presence "chat".

In response to reception of the presence information transmitted from the terminal apparatus 10c, the transmission/reception unit 51 of the management system 50 transmits the received presence information to the terminal apparatus 70x for a customer, which has logged in to the management system 50 (step S44').

The transmission/reception unit 71 of the terminal apparatus 70x receives the presence information transmitted from the terminal apparatus 10c for operators through the management system 50. The storing/reading processing unit 89 of the terminal apparatus 70x records the communication ID, presence, and feature information included in the received presence information, in association with each other in the address management table (step S46').

If the presence of the terminal apparatus 10c is changed to "chat", the terminal apparatus 10c is no longer capable of responding the call start request from the terminal apparatus 70x. Thus, the transmission control unit 82 of the terminal apparatus 70x deletes the communication ID "O03" of the terminal apparatus 10c from the destination management table to update the destination management table (step S94).

The transmission control unit 82 of the terminal apparatus 70x determines whether the communication ID of the destination of the call start request is recorded in the updated destination management table (step S95).

If no communication ID of the destination of the call start request is recorded in the updated destination management table as a result of deletion of the communication ID "O03" of the terminal apparatus 10c that has transmitted the presence information (NO in step S95), the image outputting unit 77 causes the display 720 to output a message indicating the failure of connection to the operator (step S96). Note that if the communication ID of the destination of the call start request is recorded in the updated destination management table, the terminal apparatus 70x may be connected to the remaining destination of the call start request, and thus the image outputting unit 77 does not output the message.

Next, a process for establishing communication between the terminal apparatus 10 and the terminal apparatus 70 will be described with reference to FIG. 15. FIG. 15 is a sequence diagram illustrating an example of the process for establishing communication between the terminal apparatus 10 and the terminal apparatus 70. In the following description, a case where the terminal apparatus 10a responds the call start request from the terminal apparatus 70x will be described.

The transmission/reception unit 11 of the terminal apparatus 10a receives the call start request transmitted from the terminal apparatus 70x through the management system 50 (see step S89-2 in FIG. 12). Upon reception of the call start request, the image outputting unit 17 of the terminal apparatus 10a outputs a message to the display 720. The message includes information of the requesting apparatus corresponding to the communication ID "C01" included in the call start request, and the feature "Hawaii" corresponding to the feature information "hw" included in the call start request.

FIG. 16 illustrates a display example of the message. Since a message 150 includes a feature 151, the operator who uses the terminal apparatus 70 can acquire in advance what country or area is to be explained, before start of a call.

The message in FIG. 16 includes a respond button 152 for receiving an allowance of start of a call. If the user depresses the respond button 152 on the screen in the terminal apparatus 10a, the operation input receiving unit 12 receives operation input for allowing a response (step S101). If the operation input for allowing a response is accepted, the transmission/reception unit 11 of the terminal apparatus 10a transmits a response to the management system 50 (step S102). The response includes the communication ID "C01" of the transmitter of the call start request and the communication ID "O01" of the terminal apparatus 10a.

The transmission/reception unit 51 of the management system 50 receives the response transmitted from the terminal apparatus 10a. The transmission/reception unit 51 of the management system 50 transmits the received response to the terminal apparatus 70x identified by the communication ID "C01" included in the response (step S103).

Upon reception of the response, the transmission/reception unit 71 of the terminal apparatus 70x transmits a communication establishment request to the management system 50 (step S104). The communication establishment request is for establishing communication with the terminal apparatus 10a that has transmitted the response and includes the communication ID "C01" of the terminal apparatus 70x and the communication ID "O01" of the terminal apparatus 10a that has transmitted the response.

The transmission/reception unit 71 of the management system 50 receives the communication establishment request. The session control unit 54 of the management system 50 performs control for establishing a session between the terminal apparatus 10a and the terminal apparatus 70x identified by the communication IDs "O01" and "C01" included in the communication establishment request (step S105). The session is for transmitting content data such as image data and audio data through the relay apparatus 30. Note that the session is not limited to the above one and may be a session for transmitting content data directly between the terminal apparatus 10a and the terminal apparatus 70x via the communication network 2.

Once the communication between the terminal apparatus 10a and the terminal apparatus 70x is established, the terminal apparatus 10a transmits image data of an image captured by the terminal apparatus 10a and audio data collected by the terminal apparatus 10a to the terminal apparatus 70x as a counterpart through the relay apparatus 30. Further, once the communication between the terminal apparatus 10a and the terminal apparatus 70x is established, the terminal apparatus 70x transmits image data of an image captured by the terminal apparatus 70x and audio data collected by the terminal apparatus 70x to the terminal apparatus 10a as a counterpart through the relay apparatus 30. The image outputting unit 17 of the terminal apparatus 10a and the image outputting unit 77 of the terminal apparatus 70x output the received content data. Thus, users can start a call.

### Process in which Operator Operates Guest's Terminal Apparatus during Teleconference

In the following description, a process in which an operator operates the guest's terminal apparatus 70 during a teleconference will be described.

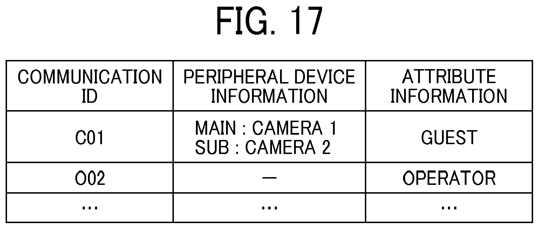

First, the attribute information management DB 1001 will be described with reference to FIG. 17. FIG. 17 is a conceptual diagram of an example of an attribute information management table stored in the attribute information management DB 1001. In the attribute information management DB 1001, information used by the terminal apparatus 10 for managing the attribute information transmitted from the terminal apparatus 10 and the terminal apparatus 70 is registered. In the attribute information management table, a communication ID, peripheral device information, and attribute information are recorded in association with each other. Thus, the terminal apparatus 10 at the call center 8 can identify which one of the terminal apparatuses 10 and the terminal apparatus 70 is the guest's terminal apparatus 70 and acquire peripheral device information of the terminal apparatus 70, so that the operator can operate the peripheral device or peripheral devices included in the terminal apparatus 70 operated by the guest.

Note that the terminal apparatus 10 operated by the operator does not transmit peripheral device information, and thus, the peripheral device information is not associated with the communication ID "O02" in FIG. 17. However, the terminal apparatus 10 operated by the operator may also transmit the peripheral device information.

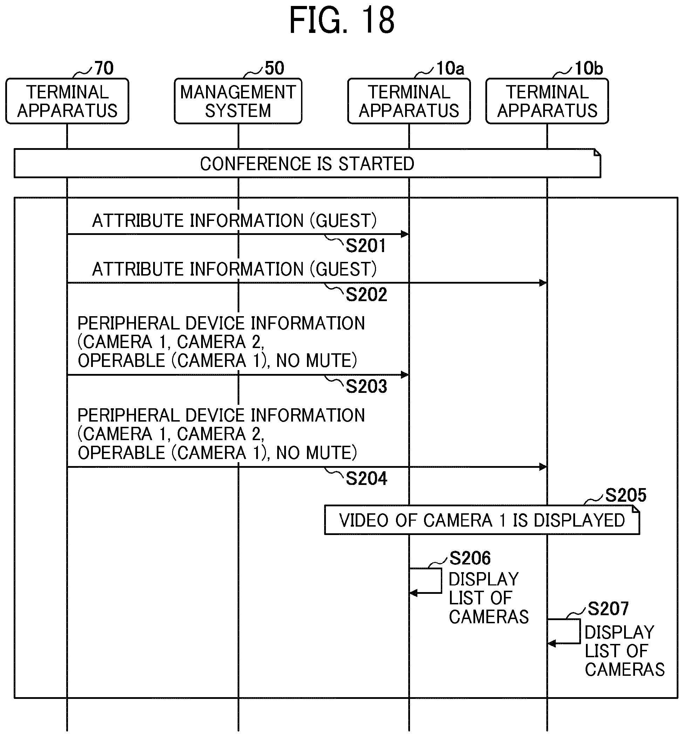

Next, a process in which the terminal apparatus 70 transmits attribute information and peripheral device information to the terminal apparatuses 10 will be described with reference to FIG. 18. FIG. 18 is an example of a sequence diagram illustrating a procedure in which the terminal apparatus 70 transmits attribute information and peripheral device information to the terminal apparatuses 10.

S201, S202: As described in step S105 in FIG. 15, once communication is established between the terminal apparatus 10 and the terminal apparatus 70, the attribute information transmitting unit 74 of the terminal apparatus 70 at the store 7 transmits attribute information (guest) together with the communication ID to the terminal apparatuses 10a and 10b at the call center 8 through the transmission/reception unit 11. The attribute information is transmitted to each of the terminal apparatuses 10 at the call center 8 with which communication is established.

S203, S204: The peripheral device information transmitting unit 76 of the terminal apparatus 70 at the store 7 transmits, to the terminal apparatuses 10a and 10b at the call center 8, information of peripheral devices (e.g., the cameras 712a and 712b, the microphone 714, and the speaker 715) included in the terminal apparatus 70 together with the communication ID to the through the transmission/reception unit 71. For simplicity, the camera 712a will be referred to as a camera 1 (main camera) and the camera 712b will be referred to as a camera 2 (sub-camera).

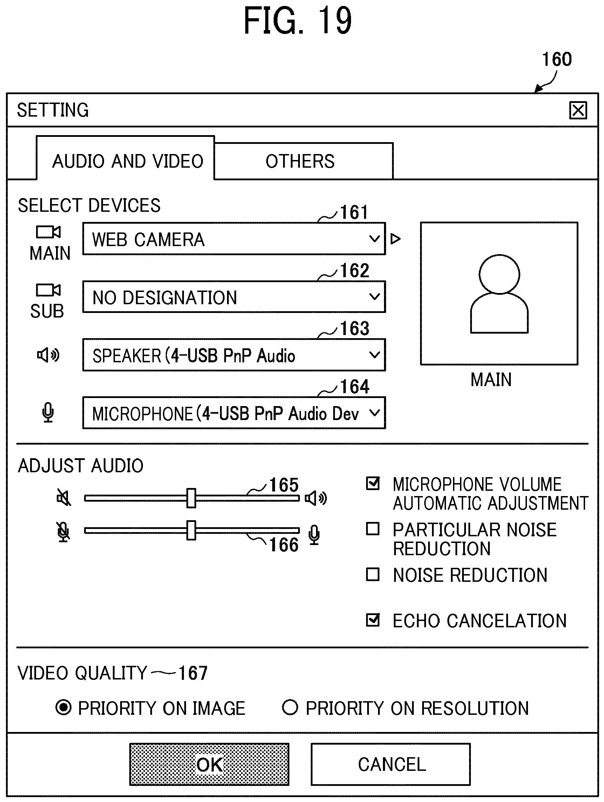

In addition, the peripheral device information includes the state of the camera 1 that is currently operable, the state of the microphone 714 such as a mute state, and the like. The peripheral device information is transmitted to each of the terminal apparatuses 10 at the call center 8 with which communication is established. Thus, the peripheral device information is, for example, a list of the cameras 712a and 712b, the microphone 714, the speaker 715, and the like included in the terminal apparatus 70, and information of a currently operable peripheral device. In addition, in a case where a plurality of peripheral devices are of the same type, the peripheral device information includes information as to whether which is a main device and which is a sub-device, for example. The peripheral devices are registered in the guest application software A7. The registration method will be described in detail with reference to FIG. 19.

S205: Since communication is established, the transmission/reception unit 11 of each of the terminal apparatuses 10a and 10b at the call center 8 receives image data of the currently operable camera 1 and audio data acquired by the microphone 714. The image outputting unit 17 causes the display 720 to display the image data of the currently operable camera 1, and the speaker 715 outputs the audio data.

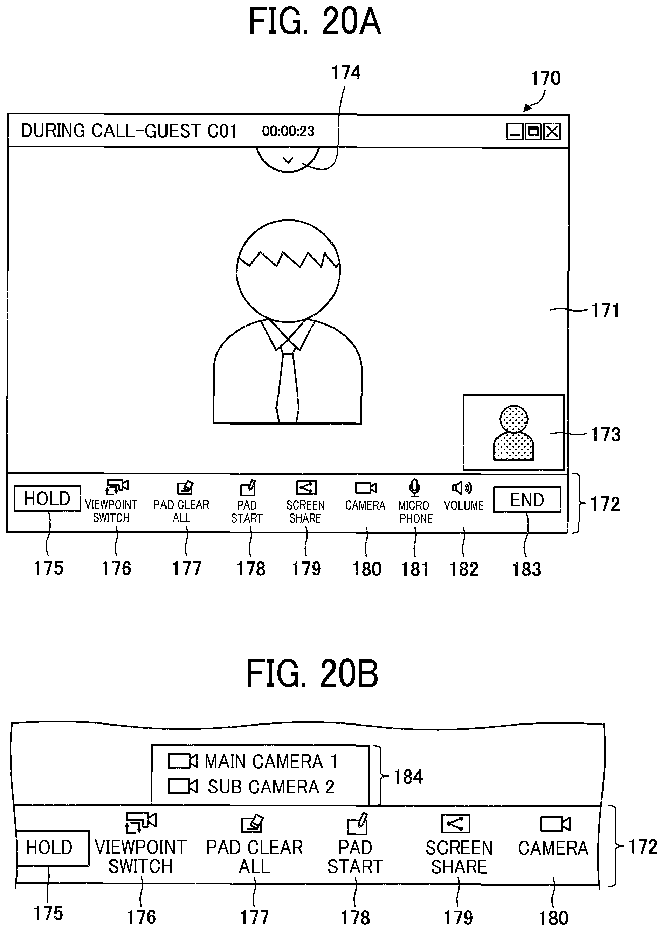

S206, S207: The attribute information receiving unit 15 of each of the terminal apparatuses 10a and 10b at the call center 8 receives attribute information through the transmission/reception unit 11. In addition, the peripheral device information receiving unit 16 receives the peripheral device information. The attribute information receiving unit 15 stores the attribute information in association with the communication ID in the attribute information management DB 1001. The peripheral device information receiving unit 16 stores the peripheral device information in association with the communication ID in the attribute information management DB 1001. Note that the terminal apparatuses 10a and 10b at the call center 8 also mutually transmit the attribute information to each other. The image outputting unit 17 of each of the terminal apparatuses 10a and 10b can display, on the display 720, a list of peripheral devices included in the terminal apparatus 70 at the store 7. FIG. 20 illustrates a display example.

FIG. 19 illustrates an example of a peripheral device setting screen 160 displayed by the terminal apparatus 70. Before a guest uses the terminal apparatus 70, a staff at the store 7 displays in advance the setting screen 160 as in FIG. 19 and sets parameters related to the peripheral devices. The setting screen 160 includes a main camera selection field 161, a sub-camera selection field 162, a speaker selection field 163, a microphone selection field 164, and the like. For example, the staff can select a web camera in the main camera selection field 161 and can select a document camera in the sub-camera selection field 162.

Although the camera includes the main camera and the sub-camera in FIG. 19, the speaker selection field 163 may include a guest speaker and a staff speaker. In this case, the operator can make business announcement for staffs. In addition, the microphone selection field 164 may include a guest microphone and a staff microphone. In this case, the operator can have a conversation with staffs.

Each of the selection field has a pull-down button displaying peripheral devices included in the terminal apparatus 70 (managed by the OS) acquired by the image outputting unit 77 from the OS 7020. Thus, the staff can freely select peripheral devices that are available for the terminal apparatus 70. In addition, the setting screen 160 further includes volume adjustment bars 165 and 166, a video setting field 167, and the like.

The peripheral device information that is set on the setting screen 160 in FIG. 19 is stored in the storage 7000 of the terminal apparatus 70. As illustrated in FIG. 18, once the terminal apparatus 70 starts communication with the terminal apparatus 10, the attribute information is transmitted to the terminal apparatus 10 to be stored in the attribute information management DB 1001. Thus, the operator causes the list of peripheral devices included in the terminal apparatus 70 to be displayed on the terminal apparatus 10 so as to remotely operate a given peripheral device.

FIGs. 20A and 20B illustrate an example of a call screen displayed on the operator's terminal apparatus 10 during a teleconference. FIG. 20A illustrates an entire screen example of a call screen 170, and FIG. 20B is an enlarged view of an operation part 172 of the call screen 170. The call screen 170 includes a main image field 171, a sub-image field 173, a hold button 175, a viewpoint switching button 176, a pad clear all button 177, a pad start button 178, a screen share button 179, a camera button 180, a microphone button 181, a volume button 182, an end button 183, a menu drawer button 174.

The hold button 175 is a button by which the terminal apparatus 10 stops transmission of image and audio with the communication maintained. This is used if the operator is away from the terminal apparatus 10 for a short period of time. Depression of the hold button 175 is transmitted to the guest's terminal apparatus 70. Upon detection of the depression of the hold button 175, the guest's terminal apparatus 70 reads a predetermined image from the storage 7000 and displays the image on the display 720. For example, a message such as "Operator is away" is displayed so that the guest does not feel strange. The displayed image can be set by the staff at the store 7, and thus, an advertisement or a moving image, for example, can be displayed.

The viewpoint switching button 176 is a button by which the operator switches an operable camera (that transmits an image) between the camera 1 and the camera 2 in the terminal apparatus 70. If the operator depresses the viewpoint switching button 176, the operation input receiving unit 12 receives the depression, and the image outputting unit 17 displays a selection menu 184 including a list of cameras 712 that can be switched. Specifically, the terminal identifying unit 21 refers to the attribute information management DB 1001 stored in the storage unit 1000 and identifies the communication ID for which the attribute information is "guest". The image outputting unit 17 acquires peripheral device information associated with the communication ID. In the peripheral device information, the main camera 1 and the sub-camera 2 (the cameras 712a and 712b) are registered. Thus, a popup box of the camera selection menu 184 is displayed as illustrated in FIG. 20B. Since the camera selection menu 184 displays the main camera 1 and the sub-camera 2, the operator can easily select either one of the main camera and the sub-camera.

The term "pad" used in the pad clear all button 177 refers to a pen tablet 190 (see FIG. 1) that is present in a lower portion of the display of the guest's terminal apparatus 70. The pen tablet 190 is used by the guest to tell the operator things that are difficult to tell verbally (e.g., date of birth). That is, handwriting information on the pen tablet 190 is transmitted to the operator's terminal apparatus 10. The pad clear all button 177 is a button by which what is written on the pen tablet 190 is all cleared. The pad start button 178 is a button for starting the pen tablet. The screen share button 179 is a button by which the operator's terminal apparatus 10 transmits document data other than images captured by the cameras 712 to the guest's terminal apparatus 70. If the operator depresses the screen share button 179, a list of active software (e.g., presentation software and PDF display software) in the terminal apparatus 10 is displayed, and thus, the operator selects software for displaying document data to be shared. The camera button 180, the microphone button 181, and the volume button 182 are buttons by which, for example, the operator switches cameras, mutes the microphone, and adjusts the speaker volume, of the terminal apparatus 10.

The end button 183 is a button for ending communication between the terminal apparatus 10 and the terminal apparatus 70 (presence is changed from "chat" to "online"). The operator is allowed to end the communication. The menu drawer button 174 is a button for displaying a menu for calling another operator and a menu for calling a sound recording (video recording) function to be superposed on the main image field 171. Calling another operator is calling an operator who can answer a question or the like from the guest that the operator who is currently talking with the guest is unable to answer. As the menu for calling another operator, the feature list screen illustrated in FIG. 13 or a menu on which more detailed features can be selected is displayed.

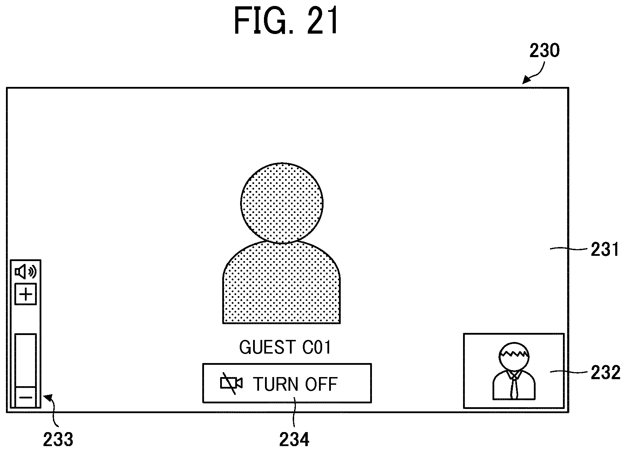

Next, a call screen 230 displayed on the guest's terminal apparatus 70 will be described with reference to FIG. 21. FIG. 21 illustrates an example of the call screen 230 displayed on the guest's terminal apparatus 70 during a teleconference. Unlike in FIGs. 20A and 20B, the call screen 230 displayed on the guest's terminal apparatus 70 includes a main image field 231, a sub-image field 232, a speaker volume button 233, and a sub-image display/non-display button 234. That is, the number of operation buttons for operating the peripheral devices is smaller than that in the terminal apparatus 10. Thus, the guest is able to perform an operation for adjusting the speaker volume and an operation for switching between display and non-display of the sub-image field 232 (to display the face of the guest). This can increase the guest's usability of the terminal apparatus 70.

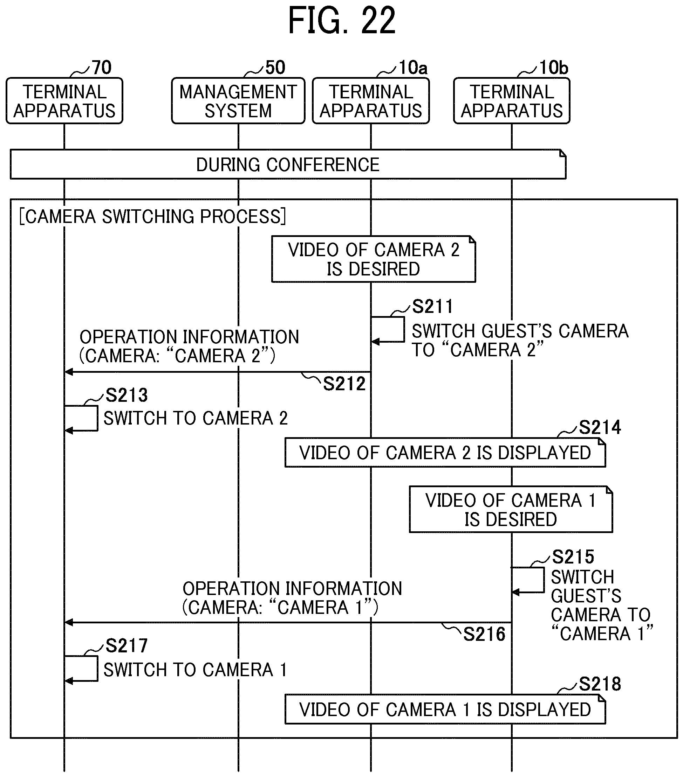

Next, a process in which the terminal apparatuses 10 transmit operation information of peripheral devices to the terminal apparatus 70 will be described with reference to FIG. 22. FIG. 22 is an example of a sequence diagram illustrating a procedure in which the terminal apparatuses 10 transmit operation information of peripheral devices to the terminal apparatus 70. Note that a main camera captures an image in the terminal apparatus 70.

S211: An operator of the terminal apparatus 10a wishes to see an image captured by a sub-camera. The operator causes the camera selection menu 184 to be displayed as illustrated in FIG. 20B and selects "camera 2" that is the sub-camera. At this time, the terminal identifying unit 21 refers to the attribute information management DB 1001 and identifies the communication ID for which the attribute information is "guest". The terminal identifying unit 21 acquires peripheral device information associated with the communication ID, and the image outputting unit 17 displays the camera selection menu 184. The operation input receiving unit 12 of the terminal apparatus 10a receives selection of "camera 2".

S212: The transmission/reception unit 11 of the terminal apparatus 10a transmits operation information for switching to "camera 2" together with the communication ID of the guest's terminal apparatus 70 to the guest's terminal apparatus 70. The communication ID of the guest's terminal apparatus 70 is associated with the attribute information "guest" in the attribute information management DB 1001. The communication ID is attached so that the management system 50 transmits the operation information to the terminal apparatus 70.

S213: The operation information receiving unit 83 of the guest's terminal apparatus 70 receives the operation information for switching to "camera 2" through the transmission/reception unit 71, and the peripheral device operating unit 75 requests switching from the main camera to the sub-camera to the image capturing unit 78. Thus, the image capturing unit 78 generates image data captured by the sub-camera.

S214: Thus, the image outputting unit 17 of each of the operator's terminal apparatuses 10a and 10b displays an image captured by the sub-camera of the guest's terminal apparatus 70 on the display 720.

Subsequently, if an operator of the terminal apparatus 10b wishes to see an image captured by the main camera, steps S215 to S218 are performed. Steps S215 to S218 are the same as or substantially the same as steps S211 to S214 except for switching the sub-camera to the main camera.

In the above manner, the operator's terminal apparatuses 10a and 10b can both operate the peripheral devices of the guest's terminal apparatus 70. In the terminal apparatus 70, the operation information that is transmitted last is valid.

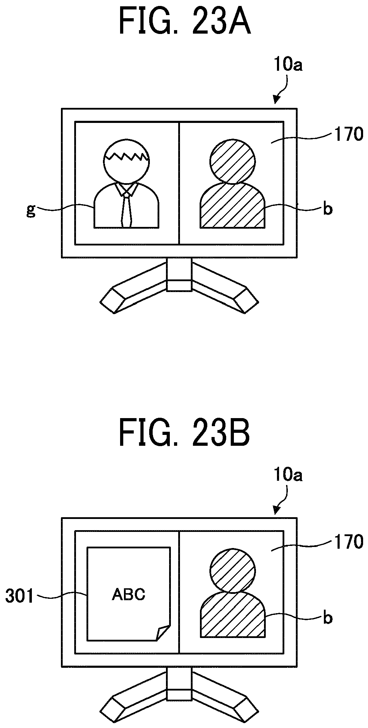

Display examples of the call screen 170 will be described with reference to FIGs. 23A and 23B. FIGs. 23A and 23B illustrate examples of the call screen 170 displayed on the display 720 of the operator's terminal apparatus 10a. FIG. 23A illustrates the call screen 170 displayed in a case where the guest's terminal apparatus 70 captures an image of the guest by using the main camera 712. The terminal apparatus 10a is in communication with not only the guest's terminal apparatus 70 but also the terminal apparatus 10b. Thus, the call screen 170 is divided into two parts, and the guest g and the operator b of the terminal apparatus 10b are displayed in the individual parts.

FIG. 23B illustrates the call screen 170 displayed in a case where the guest's terminal apparatus 70 captures an image of a document by using the sub-camera. An operator of the terminal apparatus 10a has switched the operable camera in the terminal apparatus 70 from the main camera to the sub-camera. Thus, on the call screen 170 of the operator's terminal apparatus 10a, a document image 301 is displayed instead of the guest g.

In addition, although the main camera and the sub-camera are switched in FIGs. 23A and 23B, the operator can also perform other operations on the terminal apparatus 70.

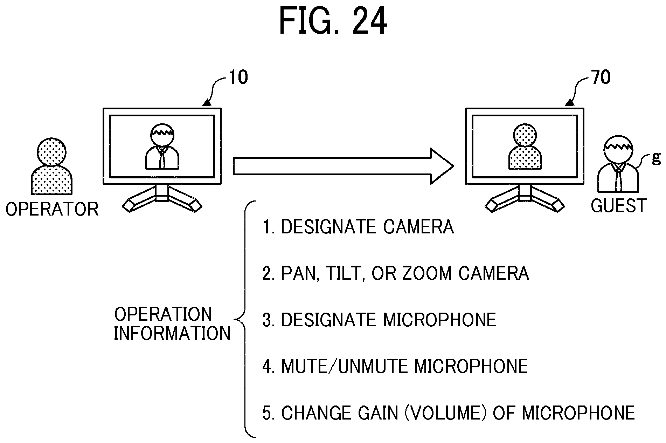

FIG. 24 illustrates examples of operation information of operations that an operator can perform on the terminal apparatus 70. The operator can transmit operation information of operations other than "designate camera" described in this embodiment, such as "pan, tilt, or zoom camera", "designate microphone", "mute/unmute microphone", or "change gain (volume) of microphone" as long as the operation is expected during a call. The operation "pan, tilt, or zoom camera" can change the direction of a camera and zoom in or zoom out a camera, the operation "designate microphone" can acquire not only the guest's audio but also audio of the staff and surroundings. The operation "mute/unmute microphone" can mute the guest's audio if the store is noisy, for example. The operation "change gain (volume) of microphone" can increase the volume if the guest's audio is hard to hear. In addition, the speaker can be designated, and thereby, for example, the speaker can be designated if the operator wishes to call a staff at the store 7.

As for designation of a camera, the camera is not limited to two cameras, which are the main camera and the sub-camera, but the operator can switch the camera from among three or more cameras. In addition, if two or more image lines are present, two cameras can be designated at the same time from among three or more cameras. In addition, an omnidirectional camera that can perform image capturing of the surroundings 360 degrees may be selected.

As described above, in the communication system 100 according to this embodiment, in a case where the terminal apparatus 10 and the terminal apparatus 70 are in communication, on the basis of attribute information received from the other terminal apparatuses, which are the terminal apparatus 10b and the terminal apparatus 70 with which the operator's terminal apparatus 10 is communicating, the terminal apparatus 10 can identify the guest's terminal apparatus 70 and thus can transmit operation information to the guest's terminal apparatus 70.

### Variations:

Examples of the embodiment of the present invention have been described above. However, the present invention is not limited to the examples, and any modification or replacement can be made without departing from the spirit of the present invention.

For example, although application software determines attribute information in the embodiment, a guest may input attribute information. For example, in a case where the guest wishes to perform operation such as switching the camera, the guest inputs attribute information indicating that the guest has a skill; in a case where the guest does not wish to or is unable to perform operation such as switching the camera, the guest inputs attribute information indicating that the guest does not have a skill.

In addition, although the operator's terminal apparatus 10 identifies the guest's terminal apparatus 70 in the embodiment, as long as the operator's terminal apparatus 10 is known to be another operator's terminal apparatus 10, it is not necessary to transmit operation information. Furthermore, in a case where the operator wishes to adjust the orientation of a camera or the like of the other operator's terminal apparatus 10, the operator does not have to ask verbally. Thus, it is effective to use attribute information for identifying the other operator's terminal apparatus 10.

In addition, the management system 50 may include the functions of the relay apparatus 30, or the relay apparatus 30 may include the functions of the management system 50. Furthermore, the functions of the management system 50 may be implemented by a plurality of servers, or a plurality of management systems 50 may be present.

In addition, in the configuration examples such as the configuration example in FIG. 6 illustrated in the above embodiment, the processes performed by the management system 50, the terminal apparatus 10, and the terminal apparatus 70 are divided in accordance with main functions for easy understanding. However, the present invention is not restricted by the way of dividing processing units or the names of processing units. The management system 50, the terminal apparatus 10, and the terminal apparatus 70 may be divided into a larger number of processing units in accordance with processing details. Also, a processing unit may be subdivided so as to include a larger number of processes.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions.

Note that the attribute information transmitting unit 74 is an example of attribute information transmitting means, the image outputting unit 17 is an example of outputting means, the attribute information receiving unit 15 is an example of attribute information receiving means, the terminal identifying unit 21 is an example of apparatus identifying means, the operation input receiving unit 12 of the terminal apparatus 10 at the call center is an example of operation accepting means, the operation input receiving unit 72 of the terminal apparatus 70 at the store is an example of setting accepting means, the operation information transmitting unit 22 is an example of operation information transmitting means, the operation information receiving unit 83 is an example of operation information receiving means, the peripheral device information transmitting unit 76 is an example of peripheral device information transmitting means, the peripheral device information receiving unit 16 is an example of peripheral device information receiving means, and the peripheral device operating unit 75 is an example of peripheral device operating means.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. A communication system (100) comprising a plurality of terminal apparatuses including a first terminal apparatus (70x, 70y) and a second terminal apparatus (10a, 10b, 10c, 10d),
the first terminal apparatus (70x, 70y) including:
one or more peripheral devices (712a, 712b, 714, 715), each being configured to receive an input of at least one of image data and audio data; and
transmitting means (74) for transmitting, to the second terminal apparatus (10a, 10b, 10c, 10d), information regarding a user of the first terminal apparatus (70x, 70y),
the second terminal apparatus (10a, 10b, 10c, 10d) including:
outputting means (17) for outputting the at least one of the image data and the audio data received from the first terminal apparatus (70x, 70y); and
receiving means (15) for receiving the information regarding the user from the first terminal apparatus (70x, 70y),
wherein the outputting means (17) displays information regarding the one or more peripheral devices (712a, 712b, 714, 715) that the first terminal apparatus (70x, 70y) includes identified based on the information regarding the user received by the receiving means (15).

2. The communication system (100) of claim 1, wherein the information regarding the user is attribute information of the user.

3. The communication system (100) of claim 1,
wherein the second terminal apparatus (10a, 10b, 10c, 10d) further comprises:
apparatus identifying means (21) for identifying the first terminal apparatus (70x, 70y) based on the information regarding the user received by the receiving means (15);
operation accepting means (12) for accepting operation information for operating the one or more peripheral devices (712a, 712b, 714, 715) that the first terminal apparatus (70x, 70y) identified by the apparatus identifying means (21) includes; and
operation information transmitting means (22) for transmitting the operation information accepted by the operation accepting means (12) to the first terminal apparatus (70x, 70y), and
wherein the first terminal apparatus (70x, 70y) further comprises operation information receiving means (83) for receiving the operation information transmitted from the second terminal apparatus (10a, 10b, 10c, 10d).

4. The communication system (100) of claim 3,
wherein the first terminal apparatus (70x, 70y) further includes peripheral device information transmitting means (76) for transmitting, to the second terminal apparatus (10a, 10b, 10c, 10d), peripheral device information regarding the one or more peripheral devices (712a, 712b, 714, 715) that the first terminal apparatus (70x, 70y) includes,
wherein the second terminal apparatus (10a, 10b, 10c, 10d) further comprises peripheral device information receiving means (16) for receiving the peripheral device information from the first terminal apparatus (70x, 70y),
wherein the outputting means (17) displays a list of the one or more peripheral devices (712a, 712b, 714, 715) that the first terminal apparatus (70x, 70y) includes, based on the peripheral device information received by the peripheral device information receiving means (16), and
wherein the operation accepting means (12) accepts, on the list of the one or more peripheral devices displayed by the outputting means (17), selection of a peripheral device for which operation is to be accepted.

5. The communication system (100) of claim 4,
wherein the first terminal apparatus (70x, 70y) further comprises setting accepting means (72) for accepting setting of the one or more peripheral devices (712a, 712b, 714, 715) to be used by the first terminal apparatus (70x, 70y), on a setting screen for accepting setting of the one or more peripheral devices (712a, 712b, 714, 715) to be used in communication with the second terminal apparatus (10a, 10b, 10c, 10d), and
wherein the peripheral device information transmitting means (76) transmits, to the second terminal apparatus (10a, 10b, 10c, 10d), the peripheral device information regarding the one or more peripheral devices accepted by the setting accepting means (72) on the setting screen.

6. The communication system (100) of claim 4,
wherein the one or more peripheral devices (712a, 712b, 714, 715) that the first terminal apparatus (70x, 70y) includes is a plurality of cameras,
wherein the operation accepting means (12) of the second terminal apparatus (10a, 10b, 10c, 10d) accepts selection of a camera from the plurality of cameras displayed by the outputting means (17), and
wherein the operation information transmitting means (22) transmits, as the operation information, identification information of the camera for which the selection is accepted by the operation accepting means (12), to the first terminal apparatus (70x, 70y), and
wherein the first terminal apparatus (70x, 70y) further comprises peripheral device operating means (75) for switching a camera for capturing the image data based on the identification information of the camera received from the second terminal apparatus as the operation information.

7. The communication system (100) of claim 6,
wherein the one or more peripheral devices (712a, 712b, 714, 715) that the first terminal apparatus (70x, 70y) includes is at least one of a speaker and a microphone,
wherein the operation accepting means (12) receives the operation information regarding at least one of the speaker and the microphone,
wherein the operation information transmitting means (22) transmits, to the first terminal apparatus (70x, 70y), the operation information regarding at least one of the speaker and the microphone received by the operation accepting means (12), and
wherein the peripheral device operating means (75) of the first terminal apparatus (70x, 70y) is further configured to perform an operation regarding at least one of the speaker and the microphone based on the operation information received from the second terminal apparatus (10a, 10b, 10c, 10d).

8. The communication system (100) of claim 4,
wherein the number of operation buttons included in a screen displayed by outputting means (77) during communication, the operation buttons for operating the one or more peripheral devices (712a, 712b, 714, 715) of the first terminal apparatus (70x, 70y), is smaller than the number of operation buttons included in a screen displayed by the outputting means (17) of the second terminal apparatus (10a, 10b, 10c, 10d) during communication, the operation buttons for operating the one or more peripheral devices (712a, 712b, 714, 715) of the first terminal apparatus (70x, 70y).

9. The communication system (100) of claim 1, wherein the information regarding the user of the first terminal apparatus (70x, 70y) is information indicating that the user is a guest who visits a store that provides a product or service.

10. Anon-transitory computer-readable medium storing a program for causing a terminal apparatus (10a, 10b, 10c, 10d) that is communicably connected with another terminal apparatus (70x, 70y) via network to perform a method comprising:
outputting (S205, S214, S218) at least one of image data and audio data received from the another terminal apparatus (70x, 70y), the at least one of the image data and the audio data being received by a peripheral device (712a, 712b, 714, 715) that the another terminal apparatus (70x, 70y) includes; and
receiving (S201, S202), from the another terminal apparatus (70x, 70y), information regarding a user of the another terminal apparatus (70x, 70y),
wherein in the outputting, displaying (S206, S207) information regarding the peripheral device (712a, 712b, 714, 715) that the another terminal apparatus (70x, 70y) includes identified based on the received information regarding the user.

11. A terminal apparatus (70x, 70y) communicably connected with another terminal apparatus (10a, 10b, 10c, 10d) via a network, the terminal apparatus (70x, 70y) comprising:
a peripheral device (712a, 712b, 714, 715) configured to receive an input of at least one of image data and audio data; and
transmitting means (74) for transmitting, to the another terminal apparatus (10a, 10b, 10c, 10d), information regarding a user of the terminal apparatus (70x, 70y),
wherein the information regarding the user transmitted from the terminal apparatus (70x, 70y) to the another terminal apparatus (10a, 10b, 10c, 10d) is used by the another terminal apparatus (10a, 10b, 10c, 10d) for displaying information regarding the peripheral device (712a, 712b, 714, 715) that the terminal apparatus (70x, 70y) includes identified based on the information regarding the user.
